# EUROPEAN PATENT SPECIFICATION

(11) **EP 4 443 800 B1**
(45) Date of publication and mention of the grant of the patent: **17.06.2026**
(21) Application number: 22918436.1
(22) Date of filing: 26.12.2022
(51) Int. Cl.: H04L 5/00, H04L 1/1829

(54) **COMMUNICATION METHOD AND TERMINAL DEVICE**
KOMMUNIKATIONSVERFAHREN UND ENDGERÄTEVORRICHTUNG
PROCÉDÉ DE COMMUNICATION ET DISPOSITIF TERMINAL

(30) Priority: 06.01.2022 CN 202210011107; 28.01.2022 CN 202210108594
(43) Date of publication of application: 09.10.2024
(73) Proprietor: Huawei Technologies Co., Ltd., Shenzhen, Guangdong 518129 (CN)
(72) Inventor: WU, Yue, Shenzhen, Guangdong 518129 (CN); LI, Xueru, Shenzhen, Guangdong 518129 (CN)
(74) Representative: Goddar, Heinz J.
(86) International application number: PCT/CN2022/141876
(87) International publication number: WO 2023/130993

(56) References cited:
- WO-A1-2020/216130
- WO-A1-2021/057502
- WO-A1-2021/066969
- WO-A1-2021/243300
- CN-A- 108 271 261
- CN-A- 111 543 113
- SAMSUNG: "Moderator's summary for discussion [RAN93e-R18Prep-11] Evolution of duplex operation", vol. RAN WG3, no. Electronic Meeting; 20210913 - 20210917, 6 September 2021 (2021-09-06), XP052049062, Retrieved from the Internet <URL:https://ftp.3gpp.org/tsg_ran/TSG_RAN/TSGR_93e/Docs/RP-211661.zip RP-211661_RAN93e-R18Prep-11__Evolution_of_duplex_operation-v0.0.6.pdf> [retrieved on 20210906]

## Description

### TECHNICAL FIELD

This application relates to the communication field, and more specifically, to a communication method and a terminal device.

### BACKGROUND

A subband non-overlapping full-duplex technology allows an uplink and a downlink to coexist. This can improve uplink coverage and reduce a delay for hybrid automatic repeat request (Hybrid Automatic Repeat Request, HARQ) feedback. The subband non-overlapping full-duplex technology is widely used in various application scenarios such as smart manufactory, smart mining, and smart steel. Relevant prior art can be found in WO2021/066969A1,
WO2021/243300A1 and 3GPP document RP-211661.

### SUMMARY

A subband non-overlapping full-duplex technology may be applied to communication on a sidelink between two terminal devices. However, there may be a case in which the two terminal devices may simultaneously send feedback to each other. In other words, the terminal device simultaneously receives and sends the feedback. However, currently, there is no proper solution for the case in which the terminal device simultaneously receives and sends the feedback. This application provides a data transmission solution, to determine that the terminal device receives and sends feedback in different subbands. This ensures communication accuracy.

According to a first aspect of this application, a communication method is provided. The method includes: A first terminal device obtains first information, where the first information indicates a first time-frequency resource occupied by a first data channel and a second time-frequency resource occupied by a first feedback channel, the first data channel is located in a first frequency band, the first feedback channel is located in a second frequency band, the first feedback channel includes first acknowledgment information of the first data channel, the first frequency band and the second frequency band do not overlap in frequency domain, and the first terminal device is a subband non-overlapping full-duplex device; the first terminal device determines a first mapping relationship based on the first information and an identifier of the first terminal device, where the first mapping relationship includes a mapping relationship between a third time-frequency resource and a fourth time-frequency resource, the third time-frequency resource is a time-frequency resource on which the first terminal device sends the first data channel, the third time-frequency resource is a part or all of the first time-frequency resource, the fourth time-frequency resource is a time-frequency resource on which the first terminal device receives the first feedback channel, and the fourth time-frequency resource is a part or all of the second time-frequency resource; the first terminal device sends the first data channel to a second terminal device on the third time-frequency resource; and the first terminal device receives, on the fourth time-frequency resource based on the first mapping relationship, the first feedback channel from the second terminal device.

It should be noted that when the third time-frequency resource is a part of the first time-frequency resource, the fourth time-frequency resource may be a part or all of the second time-frequency resource. When the third time-frequency resource is all of the first time-frequency resource, the fourth time-frequency resource may be a part or all of the second time-frequency resource. Correspondingly, when the fourth time-frequency resource is a part of the second time-frequency resource, the third time-frequency resource may be a part or all of the first time-frequency resource. When the fourth time-frequency resource is all of the second time-frequency resource, the third time-frequency resource may be a part or all of the first time-frequency resource. A part or all of the correspondences in this application are similar to this, and are not described one by one in the following.

In this manner, the first terminal device may determine, by using the first information, the mapping relationship between the first time-frequency resource for sending the first data channel and the second time-frequency resource for receiving the first feedback channel, so that the first terminal device can be prevented from simultaneously receiving/sending a feedback channel (also referred to as feedback information) in a same frequency band. This can ensure communication reliability.

In some embodiments of the first aspect, the first information further indicates a fifth time-frequency resource occupied by a second data channel and a sixth time-frequency resource occupied by a second feedback channel, the second data channel is located in the second frequency band, the second feedback channel is located in the first frequency band, and the second feedback channel includes second acknowledgment information of the second data channel; and the first mapping relationship further includes a mapping relationship between a seventh time-frequency resource and an eighth time-frequency resource, the seventh time-frequency resource is a time-frequency resource on which the first terminal device receives the second data channel, the seventh time-frequency resource is a part or all of the fifth time-frequency resource, the eighth time-frequency resource is a time-frequency resource on which the first terminal device sends the second feedback channel, and the eighth time-frequency resource is a part or all of the sixth time-frequency resource.

In some embodiments of the first aspect, the first data channel and the second data channel are located in a same time unit. For example, the time unit includes at least one slot or at least one symbol.

In this manner, the first terminal device can simultaneously receive/send a data channel in a same time unit, to fully utilize a full-duplex capability and improve resource utilization.

In some embodiments of the first aspect, that a first terminal device obtains first information includes: The first terminal device obtains the first information preconfigured on the first terminal device.

In some embodiments of the first aspect, the method further includes: The first terminal device sends the first information to the second terminal device.

In some embodiments of the first aspect, that a first terminal device obtains first information includes: The first terminal device receives the first information from the second terminal device.

In some embodiments of the first aspect, the first information includes a first bitmap, the first bitmap indicates the first time-frequency resource and the second time-frequency resource, a length of the first bitmap is determined based on a quantity of resource units of the first feedback channel, and the resource unit includes at least one of the following: a time domain unit, a frequency domain unit, and a code domain unit.

In this manner, the first information is represented by using a bitmap, and the first mapping relationship can be more intuitively represented and determined, so that the first terminal device and the second terminal device can agree on a position of a time-frequency resource for a feedback channel, and the first terminal device can receive the feedback channel on an indicated resource unit. This improves communication efficiency.

In some embodiments of the first aspect, the method further includes: The first terminal device sends second information to the second terminal device, where the second information indicates that the first terminal device is a subband non-overlapping full-duplex device.

In some embodiments of the first aspect, the second information further indicates at least one of the following: a third frequency band is a transmit frequency band of the first terminal device; or a fourth frequency band is a receive frequency band of the first terminal device.

In some embodiments of the first aspect, when the second terminal device is a subband non-overlapping full-duplex device, the first frequency band is a frequency band negotiated by the first terminal device and the second terminal device based on the third frequency band, and/or the second frequency band is a frequency band negotiated by the first terminal device and the second terminal device based on the fourth frequency band. When the second terminal device is not the subband non-overlapping full-duplex device, the first terminal device and the second terminal device do not have the foregoing frequency band negotiation process.

In some embodiments of the first aspect, the method further includes: The first terminal device obtains third information, where the third information indicates a ninth time-frequency resource occupied by a first data channel and a tenth time-frequency resource occupied by a second feedback channel, the first data channel and the second feedback channel are located in the first frequency band, and the second feedback channel includes third acknowledgment information of the first data channel; and the first terminal device determines a second mapping relationship based on the third information and the identifier of the first terminal device, where the second mapping relationship includes a mapping relationship between an eleventh time-frequency resource and a twelfth time-frequency resource, the eleventh time-frequency resource is a time-frequency resource on which the first terminal device sends the first data channel, the eleventh time-frequency resource is a part or all of the ninth time-frequency resource, the twelfth time-frequency resource is a time-frequency resource on which the first terminal device receives the second feedback channel, and the twelfth time-frequency resource is a part or all of the tenth time-frequency resource.

In some embodiments of the first aspect, the method further includes: If the first terminal device receives, in the first frequency band, the first data channel from the second terminal device, the first terminal device sends the second feedback channel to the second terminal device in the first frequency band based on the second mapping relationship.

In some embodiments of the first aspect, the method further includes: if the first terminal device receives, in the second frequency band, the second data channel from the second terminal device, the first terminal device sends the second feedback channel to the second terminal device in the first frequency band based on the first mapping relationship.

In this manner, the first terminal device can determine, based on a frequency band in which a data channel is received, a mapping relationship based on a case in which a feedback channel is sent, to send the feedback channel in a fixed frequency band. This can prevent a feedback channel from being simultaneously received/sent in a same frequency band, and improve communication reliability.

According to a second aspect of this application, a communication method is provided. The method includes: A first terminal device obtains third information, where the third information indicates a first time-frequency resource occupied by a first data channel and a second time-frequency resource occupied by a second feedback channel, the first data channel and the second feedback channel are located in a first frequency band, the second feedback channel includes first acknowledgment information of the first data channel, and the first terminal device is a subband non-overlapping full-duplex device; the first terminal device determines a second mapping relationship based on the third information and an identifier of the first terminal device, where the second mapping relationship includes a mapping relationship between a third time-frequency resource and a fourth time-frequency resource, the third time-frequency resource is a time-frequency resource on which the first terminal device sends the first data channel, the third time-frequency resource is a part or all of the first time-frequency resource, the fourth time-frequency resource is a time-frequency resource on which the first terminal device receives the second feedback channel, and the fourth time-frequency resource is a part or all of the second time-frequency resource; the first terminal device sends the first data channel to a second terminal device on the third time-frequency resource; and the first terminal device receives, on the fourth time-frequency resource based on the second mapping relationship, the second feedback channel from the second terminal device.

In some embodiments of the second aspect, the third information further indicates a fifth time-frequency resource occupied by a second data channel and a sixth time-frequency resource occupied by a first feedback channel, the second data channel and the first feedback channel are located in a second frequency band, the first frequency band and the second frequency band do not overlap in frequency domain, and the first feedback channel includes second acknowledgment information of the second data channel; and the second mapping relationship further includes a mapping relationship between a seventh time-frequency resource and an eighth time-frequency resource, the seventh time-frequency resource is a time-frequency resource on which the first terminal device receives the second data channel, the seventh time-frequency resource is a part or all of the fifth time-frequency resource, the eighth time-frequency resource is a time-frequency resource on which the first terminal device sends the first feedback channel, and the eighth time-frequency resource is a part or all of the sixth time-frequency resource.

In some embodiments of the second aspect, the first data channel and the second data channel are located in a same time unit. For example, the time unit includes at least one slot or at least one symbol.

In some embodiments of the second aspect, that a first terminal device obtains third information includes: The first terminal device obtains the third information preconfigured on the first terminal device.

In some embodiments of the second aspect, the method further includes: The first terminal device sends the third information to the second terminal device.

In some embodiments of the second aspect, that a first terminal device obtains third information includes: The first terminal device receives the third information from the second terminal device.

In some embodiments of the second aspect, the third information includes a second bitmap, the second bitmap indicates the first time-frequency resource and the second time-frequency resource, a length of the second bitmap is determined based on a quantity of resource units of the second feedback channel, and the resource unit includes at least one of the following: a time domain unit, a frequency domain unit, and a code domain unit.

In some embodiments of the second aspect, the method further includes: The first terminal device sends second information to the second terminal device, where the second information indicates that the first terminal device is a subband non-overlapping full-duplex device.

According to a third aspect of this application, a communication method is provided. The method includes: A second terminal device obtains first information, where the first information indicates a first time-frequency resource occupied by a first data channel and a second time-frequency resource occupied by a first feedback channel, the first data channel is located in a first frequency band, the first feedback channel is located in a second frequency band, the first feedback channel includes first acknowledgment information of the first data channel, and the first frequency band and the second frequency band do not overlap in frequency domain; the second terminal device determines a first mapping relationship based on the first information and an identifier of the first terminal device, where the first mapping relationship includes a mapping relationship between a third time-frequency resource and a fourth time-frequency resource, the third time-frequency resource is a time-frequency resource on which the first terminal device sends the first data channel, the third time-frequency resource is a part or all of the first time-frequency resource, the fourth time-frequency resource is a time-frequency resource on which the first terminal device receives the first feedback channel, the fourth time-frequency resource is a part or all of the second time-frequency resource, and the first terminal device is a subband non-overlapping full-duplex device; the second terminal device receives, on the third time-frequency resource, the first data channel from the first terminal device; and the second terminal device sends, on the fourth time-frequency resource based on the first mapping relationship, the first feedback channel to the first terminal device.

In some embodiments of the third aspect, the first information further indicates a fifth time-frequency resource occupied by a second data channel and a sixth time-frequency resource occupied by a second feedback channel, the second data channel is located in the second frequency band, the second feedback channel is located in the first frequency band, and the second feedback channel includes second acknowledgment information of the second data channel; and the first mapping relationship further includes a mapping relationship between a seventh time-frequency resource and an eighth time-frequency resource, the seventh time-frequency resource is a time-frequency resource on which the first terminal device receives the second data channel, the seventh time-frequency resource is a part or all of the fifth time-frequency resource, the eighth time-frequency resource is a time-frequency resource on which the first terminal device sends the second feedback channel, and the eighth time-frequency resource is a part or all of the sixth time-frequency resource.

In some embodiments of the third aspect, the first data channel and the second data channel are located in a same time unit. For example, the time unit includes at least one slot or at least one symbol.

In some embodiments of the third aspect, that a second terminal device obtains first information includes: The second terminal device obtains the first information preconfigured on the second terminal device.

In some embodiments of the third aspect, the method further includes: The second terminal device sends the first information to the first terminal device.

In some embodiments of the third aspect, that a second terminal device obtains first information includes: The second terminal device receives the first information from the first terminal device.

In some embodiments of the third aspect, a part or all of the first information includes a first bitmap, the first bitmap indicates the first time-frequency resource and the second time-frequency resource, a length of the first bitmap is determined based on a quantity of resource units of the first feedback channel, and the resource unit includes at least one of the following: a time domain unit, a frequency domain unit, and a code domain unit.

In some embodiments of the third aspect, the method further includes: The second terminal device receives second information from the first terminal device, where the second information indicates that the first terminal device is a subband non-overlapping full-duplex device.

In some embodiments of the third aspect, the second information further indicates at least one of the following: a third frequency band is a transmit frequency band of the first terminal device; or a fourth frequency band is a receive frequency band of the first terminal device.

In some embodiments of the third aspect, when the second terminal device is a subband non-overlapping full-duplex device, the first frequency band is a frequency band negotiated by the first terminal device and the second terminal device based on the third frequency band, and/or the second frequency band is a frequency band negotiated by the first terminal device and the second terminal device based on the fourth frequency band. When the second terminal device is not the subband non-overlapping full-duplex device, the first terminal device and the second terminal device do not have the foregoing frequency band negotiation process.

In some embodiments of the third aspect, the method further includes: The second terminal device sends fourth information to the first terminal device, where the fourth information indicates that the second terminal device is a subband non-overlapping full-duplex device, or the fourth information indicates that the second terminal device is a subband non-overlapping half-duplex device.

In some embodiments of the third aspect, the method further includes: The second terminal device obtains third information, where the third information indicates a ninth time-frequency resource occupied by a first data channel and a tenth time-frequency resource occupied by a second feedback channel, the first data channel and the second feedback channel are located in the first frequency band, and the second feedback channel includes third acknowledgment information of the first data channel; and the second terminal device determines a second mapping relationship based on the third information and the identifier of the first terminal device, where the second mapping relationship includes a mapping relationship between an eleventh time-frequency resource and a twelfth time-frequency resource, the eleventh time-frequency resource is a time-frequency resource on which the first terminal device sends the first data channel, the eleventh time-frequency resource is a part or all of the ninth time-frequency resource, the twelfth time-frequency resource is a time-frequency resource on which the first terminal device receives the second feedback channel, and the twelfth time-frequency resource is a part or all of the tenth time-frequency resource.

In some embodiments of the third aspect, the method further includes: If the second terminal device sends the first data channel to the first terminal device in the first frequency band, the second terminal device receives, in the first frequency band based on the second mapping relationship, the second feedback channel from the first terminal device.

In some embodiments of the third aspect, the method further includes: If the second terminal device sends the second data channel to the first terminal device in the second frequency band, the second terminal device receives, in the first frequency band based on the first mapping relationship, the first feedback channel from the first terminal device.

According to a fourth aspect, a communication method is provided. The method includes: A second terminal device obtains third information, where the third information indicates a first time-frequency resource occupied by a first data channel and a second time-frequency resource occupied by a second feedback channel, the first data channel and the second feedback channel are located in a first frequency band, and the second feedback channel includes first acknowledgment information of the first data channel; the second terminal device determines a second mapping relationship based on the third information and an identifier of the first terminal device, where the second mapping relationship includes a mapping relationship between a third time-frequency resource and a fourth time-frequency resource, the third time-frequency resource is a time-frequency resource on which the first terminal device sends the first data channel, the third time-frequency resource is a part or all of the first time-frequency resource, the fourth time-frequency resource is a time-frequency resource on which the first terminal device receives the second feedback channel, the fourth time-frequency resource is a part or all of the second time-frequency resource, and the first terminal device is a subband non-overlapping full-duplex device; the second terminal device receives, on the third time-frequency resource, the first data channel from the first terminal device; and the second terminal device sends, on the fourth time-frequency resource based on the second mapping relationship, the second feedback channel to the first terminal device.

In some embodiments of the fourth aspect, the third information further indicates a fifth time-frequency resource occupied by a second data channel and a sixth time-frequency resource occupied by a first feedback channel, the second data channel and the first feedback channel are located in a second frequency band, the first frequency band and the second frequency band do not overlap in frequency domain, and the first feedback channel includes second acknowledgment information of the second data channel; and the second mapping relationship further includes a mapping relationship between a seventh time-frequency resource and an eighth time-frequency resource, the seventh time-frequency resource is a time-frequency resource on which the first terminal device receives the second data channel, the seventh time-frequency resource is a part or all of the fifth time-frequency resource, the eighth time-frequency resource is a time-frequency resource on which the first terminal device sends the first feedback channel, and the eighth time-frequency resource is a part or all of the sixth time-frequency resource.

In some embodiments of the fourth aspect, the first data channel and the second data channel are located in a same time unit. For example, the time unit includes at least one slot or at least one symbol.

In some embodiments of the fourth aspect, that a second terminal device obtains third information includes: The second terminal device obtains the third information preconfigured on the second terminal device.

In some embodiments of the fourth aspect, the method further includes: The second terminal device sends the third information to the first terminal device.

In some embodiments of the fourth aspect, that a second terminal device obtains third information includes: The second terminal device receives the third information from the first terminal device.

In some embodiments of the fourth aspect, a part or all of the third information includes a second bitmap, the second bitmap indicates the first time-frequency resource and the second time-frequency resource, a length of the second bitmap is determined based on a quantity of resource units of the second feedback channel, and the resource unit includes at least one of the following: a time domain unit, a frequency domain unit, and a code domain unit.

In some embodiments of the fourth aspect, the method further includes: The second terminal device receives second information from the first terminal device, where the second information indicates that the first terminal device is a subband non-overlapping full-duplex device.

In some embodiments of the fourth aspect, the method further includes: The second terminal device sends fourth information to the first terminal device, where the fourth information indicates that the second terminal device is a subband non-overlapping full-duplex device, or the fourth information indicates that the second terminal device is a subband non-overlapping half-duplex device.

According to a fifth aspect of this application, a terminal device is provided. The terminal device includes modules or units configured to perform the method or the step included in any one of the first aspect or the implementations of the first aspect, or the terminal device includes modules or units configured to perform the method or the step included in any one of the second aspect or the implementations of the second aspect.

According to a sixth aspect of this application, a terminal device is provided. The terminal device includes modules or units configured to perform the method or the step included in any one of the third aspect or the implementations of the third aspect, or the terminal device includes modules or units configured to perform the method or the step included in any one of the fourth aspect or the implementations of the fourth aspect.

According to a seventh aspect of this application, a terminal device is provided, including a transceiver, a processor, and a memory. The memory stores instructions executed by the processor. When the instructions are executed by the processor, the terminal device is enabled to implement the method or the step included in any one of the first aspect or the implementations of the first aspect, or implement the method or the step included in any one of the second aspect or the implementations of the second aspect, or implement the method or the step included in any one of the third aspect or the implementations of the third aspect, or implement the method or the step included in any one of the fourth aspect or the implementations of the fourth aspect.

According to an eighth aspect of this application, a computer-readable storage medium is provided. The computer-readable storage medium stores computer executable instructions. When the computer executable instructions are executed by a processor, an operation of the method according to the first aspect or any embodiment of the first aspect is implemented, or an operation of the method according to the second aspect or any embodiment of the second aspect is implemented, or an operation of the method according to the third aspect or any embodiment of the third aspect is implemented, or an operation of the method according to the fourth aspect or any embodiment thereof is implemented.

According to a ninth aspect of this application, a chip or a chip system is provided. The chip or the chip system includes a processing circuit, and is configured to perform an operation of the method according to the first aspect or any embodiment of the first aspect, or implement an operation of the method according to the second aspect or any embodiment of the second aspect, or implement an operation of the method according to the third aspect or any embodiment of the third aspect, or implement an operation of the method according to the fourth aspect or any embodiment of the fourth aspect.

According to a tenth aspect of this application, a computer program or a computer program product is provided. The computer program or the computer program product is tangibly stored in a computer-readable medium and includes computer executable instructions. When the computer executable instructions are executed, an operation of the method according to the first aspect or any embodiment of the first aspect is implemented, or an operation of the method according to the second aspect or any embodiment of the second aspect is implemented, or an operation of the method according to the third aspect or any embodiment of the third aspect is implemented, or an operation of the method according to any embodiment of the fourth aspect is implemented.

### BRIEF DESCRIPTION OF DRAWINGS

The foregoing and other features, advantages, and aspects of embodiments of this application become clearer with reference to the accompanying drawings and the following detailed descriptions. In the accompanying drawings, same or similar reference numerals indicate same or similar elements.
FIG. 1 is a diagram of a principle of subband non-overlapping full-duplex;
FIG. 2 is a diagram of a scenario to which an embodiment of this application is applied;
FIG. 3 is a diagram of another scenario to which an embodiment of this application is applied;
FIG. 4 is a diagram of a principle of transmission in symmetric subbands according to an embodiment of this application;
FIG. 5 is a diagram of a principle of transmission in asymmetric subbands according to an embodiment of this application;
FIG. 6 is a schematic flowchart of communication interaction according to an embodiment of this application;
FIG. 7 is a diagram of a PSFCH and a corresponding bitmap in a symmetric subband according to an embodiment of this application;
FIG. 8 is a diagram of a PSFCH and a corresponding bitmap in an asymmetric subband according to an embodiment of this application;
FIG. 9 is a diagram of communication between a first terminal device and a full-duplex second terminal device according to an embodiment of this application;
FIG. 10 is a diagram of communication between a first terminal device and a half-duplex second terminal device according to an embodiment of this application;
FIG. 11 is a diagram of communication between a first terminal device and a half-duplex second terminal device according to an embodiment of this application;
FIG. 12 is a diagram of communication between a first terminal device and a full-duplex second terminal device according to an embodiment of this application;
FIG. 13 is a diagram of communication between a first terminal device and a half-duplex second terminal device according to an embodiment of this application;
FIG. 14 is a diagram of communication between a first terminal device and a half-duplex second terminal device according to an embodiment of this application;
FIG. 15 is a diagram of communication between a first terminal device and a full-duplex second terminal device according to an embodiment of this application;
FIG. 16 is a diagram of a structure of a feedback symbol according to an embodiment of this application;
FIG. 17 is a diagram of a structure of a feedback symbol according to an embodiment of this application;
FIG. 18 is a block diagram of a structure of a first terminal device according to an embodiment of this application;
FIG. 19 is a block diagram of a structure of a second terminal device according to an embodiment of this application; and
FIG. 20 is a block diagram of a structure of a terminal device according to an embodiment of this application.

### DESCRIPTION OF EMBODIMENTS

The following describes embodiments of this application in more detail with reference to the accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that, the accompanying drawings and embodiments of this application are only used as examples, but are not used to limit the protection scope of this application.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of this application may be implemented according to any proper communication protocol, including but not limited to 3rd generation (3rd Generation, 3G), 4th generation (4G), 5th generation (5G), and 6th generation (6G) cellular communication protocols, a wireless local area network communication protocol, for example, the institute of electrical and electronics engineers (Institute of Electrical and Electronics Engineers, IEEE) 802.11, and/or any other protocol currently known or developed in the future.

Technical solutions in embodiments of this application are applied to a communication system that complies with the any proper communication protocol, for example, a general packet radio service (General Packet Radio Service, GPRS), a global system for mobile communications (Global System for Mobile Communications, GSM), an enhanced data rates for GSM evolution (Enhanced Data rates for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronous Code Division Multiple Access, TD-SCDMA) system, a frequency division duplex (Frequency Division Duplex, FDD) system, a time division duplex (Time Division Duplex, TDD) system, a 5th generation system or a new radio (New Radio, NR) system, or a future-evolved 6th generation communication system.

The term "terminal device" in this application is any terminal device that can perform wired or wireless communication with a network device or a terminal device. The terminal device may be sometimes referred to as user equipment (User Equipment, UE). The terminal device may be any type of mobile terminal, fixed terminal, or portable terminal. In an example, the terminal device may include a mobile phone, a station, a unit, a device, a mobile terminal (Mobile Terminal, MT), a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an internet of things (Internet of Things, IoT) device, a vehicle-mounted device, a flight vehicle, a virtual reality (Virtual Reality, VR) device, an augmented reality (Augmented Reality, AR) device, a wearable device, a terminal device in a 5G network, any terminal device in an evolved public land mobile network (Public Land Mobile Network, PLMN), another device that can be used for communication, or any combination thereof. This is not limited in embodiments of this application.

The term "network device" in this application is an entity or a node that may be configured to communicate with a terminal device, for example, may be an access network device. The access network device may be an apparatus that is deployed in a radio access network and that provides a wireless communication function for the mobile terminal. For example, the access network device may be a radio access network (Radio Access Network, RAN) network device. The access network device may include various types of base stations. In an example, the access network device may include various forms of macro base stations, micro base stations, picocell base stations, femtocell base stations, relay stations, access points, remote radio units (Remote Radio Units, RRUs), radio heads (Radio Heads, RHs), and remote radio heads (Remote Radio Heads, RRHs). In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in the 5G network. In some scenarios, the access network device may include a central unit (Central Unit, CU) and/or a distributed unit (Distributed Unit, DU). The CU and DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components in a same rack. For ease of description, in subsequent embodiments of this application, the foregoing apparatuses that provide a wireless communication function for the terminal device are collectively referred to as a network device. This is not specifically limited in embodiments of this application.

The term "sidelink (sidelink, SL)" in this application is a communication link between terminal devices. In a wireless communication system, two different terminal devices may perform data communication with each other by using a network device, or may directly perform communication between terminal devices without using a network device. An interface between the two different terminal devices may be a direct communication (ProSe Communication 5, PC5) interface. An example scenario of sidelink communication is vehicle-to-everything (Vehicle-to-everything, V2X). Data transmission is performed between two different terminal devices in vehicle-to-everything by using a sidelink without using a network device. In this way, a communication delay can be effectively reduced. Another example scenario of sidelink communication is direct communication between another terminal device and a wearable device, for example, a band or a watch. Still another example scenario of sidelink communication is an industrial internet of things application scenario, for example, includes direct communication between a programmable logic controller (Programmable Logic Controller, PLC), a sensor, an executor, and the like. The sidelink supports broadcast communication, multicast communication, and unicast communication. The broadcast communication on the sidelink is similar to a behavior of broadcasting system information by a network device. A terminal device sends broadcast service data to the outside without encryption. In this case, other terminal devices that are interested in the broadcast service data and that are within an effective receiving scope may receive the broadcast service data. The multicast communication on the sidelink is communication between a plurality of terminal devices in a communication group, and each terminal device in the communication group can receive/send data of a corresponding multicast service. The unicast communication on the sidelink is similar to data communication performed after an RRC connection is established between a network device and a terminal device. The unicast communication on the sidelink requires that a unicast connection is first established between two terminal devices. After the unicast connection is established, the two terminal devices may perform data communication based on a negotiated identifier. The data may be encrypted, or may not be encrypted.

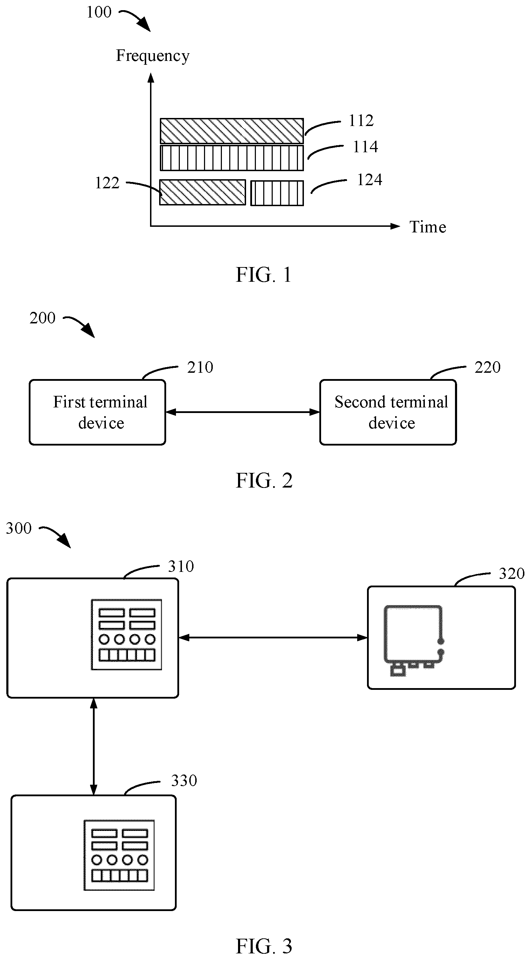

In an LTE system, a communication interface between a terminal device and a network may be referred to as a Uu interface. In the Uu interface, a subband non-overlapping full-duplex technology allows flexible configuration on time-frequency resources of an uplink and a downlink within a communication bandwidth. For example, the network device may configure more uplink transmission slots. This can improve uplink coverage of a network. In addition, the base station may configure that an uplink subband and a downlink subband coexist, to reduce a delay for HARQ feedback. FIG. 1 is a diagram of applying subband non-overlapping full-duplex 100 on the Uu interface. The subband non-overlapping full-duplex is more flexible in time-frequency resource allocation. As shown in FIG. 1, at a same time, there may be two different subbands that do not overlap in frequency domain. For example, 112 indicates an uplink time-frequency resource, and 114 indicates a downlink time-frequency resource. As shown in FIG. 1, in a same subband, there may also be two time periods that do not overlap in time domain. For example, 122 indicates an uplink time-frequency resource, and 124 indicates a downlink time-frequency resource.

The subband non-overlapping full-duplex technology may alternatively be used for communication on a sidelink between two terminal devices. In this case, an uplink and a downlink in the subband non-overlapping full-duplex technology on the Uu interface respectively correspond to a transmit link and a receive link of a terminal device in sidelink communication. The terminal device to which the subband non-overlapping full-duplex technology is applied may flexibly configure time-frequency resources for the transmit link and the receive link. In other words, at the same time, there may be two different subbands that do not overlap in frequency domain, for example, a time-frequency resource for the transmit link of the subband non-overlapping full-duplex device and a time-frequency resource for the receive link of the subband non-overlapping full-duplex device. In the same subband, there may also be two time periods that do not overlap in time domain, for example, a time-frequency resource for the transmit link of the subband non-overlapping full-duplex device and a time-frequency resource for the receive link of the subband non-overlapping full-duplex device.

The sidelink may support the multicast communication and the unicast communication, and for multicast and unicast, a HARQ feedback mechanism has been introduced, where a channel for transmitting HARQ feedback may be referred to as a physical sidelink feedback channel (Physical Sidelink Feedback Channel, PSFCH). A HARQ combines forward error correction (Forward Error Correction, FEC) coding and an automatic repeat request, to improve the reliability of transport block (Transport Block, TB) transmission. If a receive-side terminal device detects an error in transmission by using an error detection code, and cannot correct all transmission errors through FEC, the terminal device requests HARQ retransmission.

After transmission, a transmit-side terminal device waits for HARQ feedback from the receive-side terminal device. The HARQ feedback is used to transmit acknowledgment information, and the acknowledgment information includes three cases: (i) if the reception succeeds, an ACK is fed back; (ii) if the reception fails, a NACK is fed back; or (iii) if control information associated with the transmission is not successfully received within predefined time, no response is made. In a case of the NACK or no response, the transmit-side terminal device may perform HARQ retransmission. For example, depending on a maximum quantity of retransmissions, a plurality of retransmissions may exist. It may be understood that the "feedback" in this embodiment of this application may include acknowledgment information, for example, may include an ACK or a NACK.

Specifically, in the unicast communication on the sidelink, after the receive-side terminal device successfully decodes first-phase sidelink control information (Sidelink Control Information, SCI) on a physical sidelink control channel (Physical Sidelink Control Channel, PSCCH), if a TB carried on a physical sidelink shared channel (Physical Sidelink Shared Channel, PSSCH) is successfully decoded, the receive-side terminal device feeds back an ACK; otherwise, the receive-side terminal device feeds back a NACK. In the multicast communication on the sidelink, two options are supported: an option 1 and an option 2. In the option 1, after the receive-side terminal device successfully decodes the first-phase SCI, if the receive-side terminal device fails to decode the TB carried on the PSSCH, the terminal device may feed back a NACK when a distance between the two is less than or equal to a required communication range (for example, indicated in second phase SCI); otherwise, the terminal device does not send an acknowledgment. In the option 2, after the receive-side terminal device successfully decodes the first-phase SCI on the PSCCH, if the receive-side terminal device successfully decodes the TB carried on the PSSCH, the terminal device feeds back an ACK; otherwise, the terminal device feeds back a NACK. In addition, regardless of the unicast communication or the multicast communication, if the receive-side terminal device fails to decode the first-phase SCI, the terminal device does not send an acknowledgment.

The ACK/NACK feedback may be transmitted on the PSFCH. An implementation capability of the terminal device is considered, and a feedback periodicity of the PSFCH, for example, N slots, has been defined. In this way, data transmission on the PSSCH in each slot in the feedback periodicity is fed back on a same PSFCH. If the terminal device receives data on the PSSCH and sends data on the PSSCH in a feedback periodicity, the terminal device needs to send feedback and receive feedback on a same PSFCH. In this way, a conflict occurs between sending and receiving.

In one manner, a priority of the PSSCH is defined, and the terminal device may perform corresponding PSFCH transmission based on the priority of the PSSCH. For example, in the first-phase SCI, it may be specified that a priority of sending data by the terminal device on the PSSCH is higher. In this case, on the PSFCH, the terminal device first waits for feedback for the sent data on the PSSCH, and then sends feedback for the data received by the terminal device. However, this manner may increase a transmission delay, or even cause an unnecessary retransmission. This affects service transmission reliability and reduces communication efficiency.

To resolve the foregoing problem and another potential problem, an embodiment of this application provides a data transmission solution. A terminal device can separately receive and send a feedback channel (which may also be referred to as feedback information) in different subbands at the same time. In this way, a full-duplex feature can be fully used, a service transmission delay can be avoided, and communication efficiency is improved.

It should be noted that, unless otherwise specified, the channel in this application is not a physical channel, but information. For example, a physical sidelink feedback channel is physical sidelink feedback information, a data channel is data information, and a feedback channel is feedback information. Details are not listed herein one by one. The foregoing expression manner is an official expression manner in a communication standard.

FIG. 2 is a diagram of a scenario 200 to which some embodiments of this application may be applied. In the scenario 200, a first terminal device 210 and a second terminal device 220 are included, and the second terminal device 220 can perform direct communication with the first terminal device 210.

For ease of the following description, it may be assumed that the first terminal device 210 supports subband non-overlapping full-duplex, and it is assumed that the second terminal device 220 supports or does not support the subband non-overlapping full-duplex. In other words, the first terminal device 210 is a full-duplex device, and the second terminal device 220 is a full-duplex device or a half-duplex device.

It may be understood that the first terminal device 210 and the second terminal device 220 in this embodiment of this application may be implemented as various terminal devices, and may be used in various application scenarios. In an implementation, the first terminal device 210 may be implemented as a PLC device in the industrial internet of things field, and the second terminal device 220 may be implemented as a sensor device or an executor device having a full-duplex capability in the industrial internet of things field or the second terminal device 220 may be implemented as a sensor device or an executor device having no full-duplex capability in the industrial internet of things field.

FIG. 3 shows an example of an application scenario 300 according to some embodiments of this application. A PLC device 310, a sensor device 320, and an executor device 330 are shown in FIG. 3.

The PLC device 310 may perform sidelink communication with the sensor device 320, and the PLC device 310 may perform sidelink communication with the executor device 330. It may be understood that the sensor device 320 may be a full-duplex device or a half-duplex device, and the executor device 330 may be a full-duplex device or a half-duplex device.

Various types of data transmission may be performed between the PLC device 310 and the sensor device 320, and between the PLC device 310 and the executor device 330. For example, the data transmission may be periodic traffic. For example, the sensor device 320 periodically measures data and sends the data to the PLC device. For example, the PLC device 310 periodically sends an execution instruction to the executor device 330. For example, the data transmission may be aperiodic traffic, such as traffic for an anomaly alert or a firmware upgrade.

In some examples, there may be a plurality of sensor devices 320 that perform sidelink communication with the PLC device 310. Some or all of the plurality of sensor devices 320 may be full-duplex devices, or some or all of the plurality of sensor devices 320 may be half-duplex devices.

It should be noted that although FIG. 3 shows a possible application scenario in this embodiment of this application, the application scenario is only an example, and this application is not limited thereto.

With reference to FIG. 2, either of the first terminal device 210 and the second terminal device 220 may have a transmission bandwidth used for a sidelink. The transmission bandwidth may be preconfigured. For example, a network device may preconfigure a transmission bandwidth used for a sidelink. Optionally, a transmission resource, or the like may be further preconfigured.

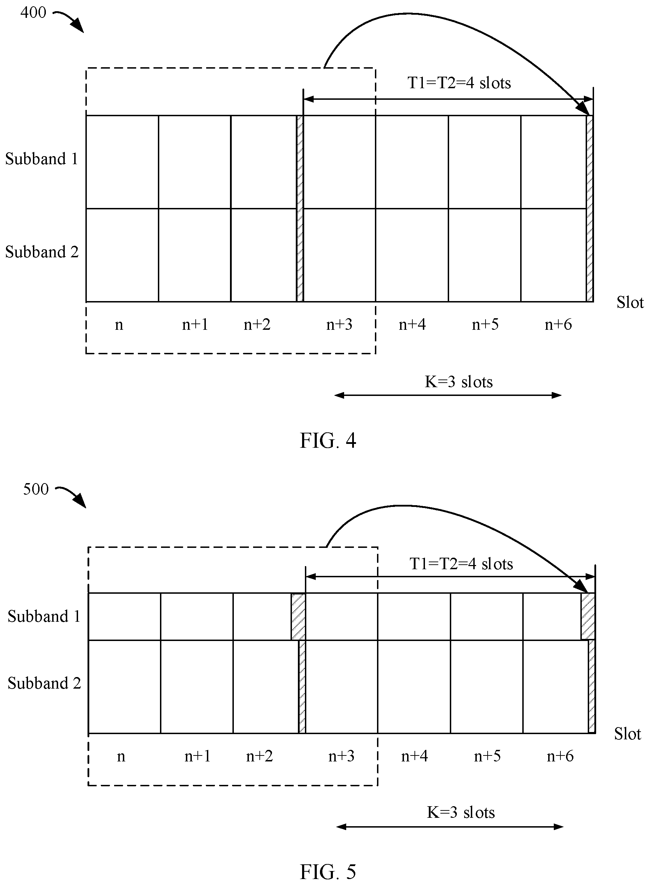

The following uses the first terminal device 210 as an example to describe, with reference to FIG. 4 and FIG. 5, a transmission bandwidth used by the first terminal device 210 for a sidelink. It may be understood that a transmission bandwidth of the second terminal device 220 is similar, and details are not described in this application.

The first terminal device 210 may have a preconfigured transmission bandwidth, for example, may include a first subband and a second subband, and frequency domain resources of the first subband and the second subband do not overlap. In some examples, the first subband is a high-frequency subband, and the second subband is a low-frequency subband. In some examples, the first subband is a low-frequency subband, and the second subband is a high-frequency subband.

For example, a first bandwidth of the first subband may be equal to a second bandwidth of the second subband. For example, FIG. 4 shows a diagram of transmission in symmetric subbands 400. In an example, this case may be referred to as a case of symmetric subbands. However, it should be understood that the name is only an example, and does not constitute a limitation on embodiments of this application. In an implementation, in FIG. 4, a bandwidth of a subband 1 at a high frequency is equal to 20 MHz, and a bandwidth of a subband 2 at a low frequency is equal to 20 MHz.

For example, the first bandwidth of the first subband may be not equal to the second bandwidth of the second subband. For example, it may be assumed that the first bandwidth is less than or greater than the second bandwidth. For example, FIG. 5 shows a diagram of transmission in asymmetric subbands 500. In an example, this case may be referred to as a case of asymmetric subbands. However, it should be understood that the name is only an example, and does not constitute a limitation on embodiments of this application. In an implementation, in FIG. 5, a bandwidth of a subband 1 at a high frequency is equal to 10 MHz, and a bandwidth of a subband 2 at a low frequency is equal to 20 MHz.

In this embodiment of this application, a resource of the PSSCH used to transmit sidelink data and the resource of the PSFCH used to transmit feedback for the sidelink data are from a same resource pool. For example, the resource of the PSFCH may be configured based on a feedback periodicity. It is assumed that the feedback periodicity is N time periods, there is one time period including a PSFCH in every N consecutive time periods, where a length of the time period in the feedback periodicity is greater than a time length of the PSFCH. For example, it is assumed that the N time periods are N slots, and a length of the PSFCH is x symbols. Optionally, the feedback periodicity may be configured as N=0, 1, 2, 4 slots, or the like. Optionally, the length of the PSFCH is one symbol or a plurality of symbols.

With reference to FIG. 4 or FIG. 5, it is assumed that a feedback periodicity in the subband 1 is T1, and a feedback periodicity in the subband 2 is T2. As shown in the figure, T1=T2=4 slots.

For information transmission on the PSSCH, to ensure communication efficiency, it may be preconfigured that the feedback is transmitted on the first PSFCH after K slots in which the information is transmitted. K is a positive integer, and indicates a minimum quantity of slots between a PSSCH and a PSFCH for the PSSCH. For example, it is assumed that K=3. With reference to FIG. 4 or FIG. 5, for information transmitted on the PSSCH in a slot n, a slot n+1, a slot n+2, and a slot n+3, feedback of the information will be on the PSFCH in a slot n+6.

In this embodiment of this application, duration, for example, a quantity of symbols, used for a PSFCH in each feedback periodicity may be preconfigured. For example, in a case of symmetric subbands shown in FIG. 4, a time length of a PSFCH in the subband 1 may be configured to be equal to a time length of a PSFCH in the subband 2, for example, both are equal to one symbol. For example, in a case of asymmetric subbands shown in FIG. 5, because a bandwidth of a subband 1 is less than a bandwidth of a subband 2, a time length of a PSFCH in the subband 1 may be configured to be greater than a time length of a PSFCH in the subband 2. For example, if the bandwidth of the subband 2 is equal to twice the bandwidth of the subband 1, the time length of the PSFCH in the subband 1 may be equal to twice the time length of the PSFCH in the subband 2. For example, the time length of the PSFCH in the subband 1 is equal to two symbols, and the time length of the PSFCH in the subband 2 is equal to one symbol.

The basic physical resource used to transmit information may be a physical resource block (Physical Resource Block, PRB). In some examples, a quantity of PRBs used for PSFCHs in the first subband is equal to a quantity of PRBs used for PSFCHs in the second subband.

In this embodiment of this application, multiplexing between a plurality of terminal devices (or referred to as a plurality of users) may be supported on a same transmission resource unit (for example, a PRB), for example, may be implemented in a code division multiplexing manner. Optionally, different terminal devices may implement orthogonality between each other by using different orthogonal codes, to multiplex a same transmission resource. For example, the orthogonal codes may be implemented as cyclic shifts of a base sequence (for example, a ZAZAC sequence or a ZC sequence).

For ease of description, the following describes main embodiments of this application based on the structures of the subband 1 and the subband 2 shown in FIG. 4 or FIG. 5. However, it should be understood that the bandwidth structures shown in FIG. 4 and FIG. 5 are only examples. Embodiments of this application may also be used for another structure. For example, a bandwidth of the subband 1 may be greater than a bandwidth of the subband 2. For example, a feedback periodicity of the subband 1 may be not equal to a feedback periodicity of the subband 2, for example, N and K may be other values.

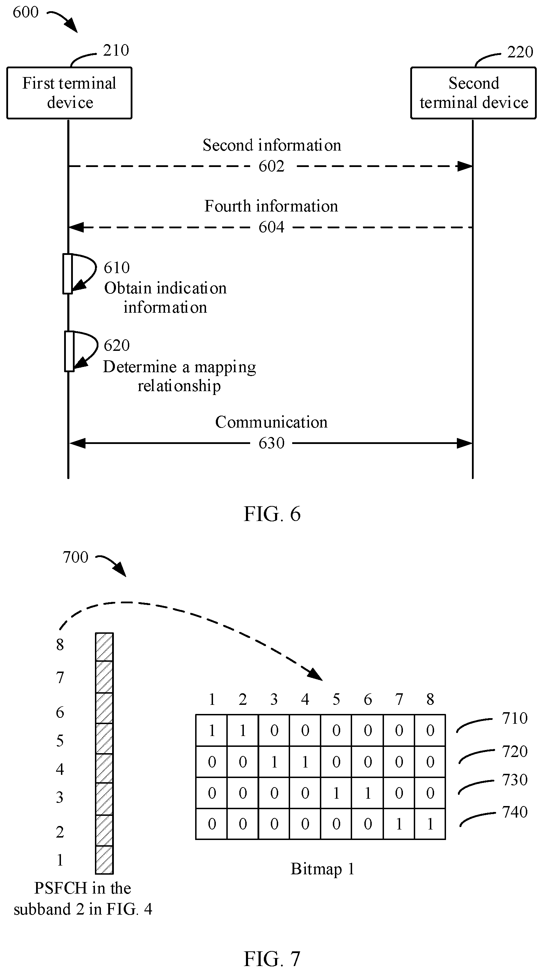

FIG. 6 is an interaction flowchart of a communication process 600 according to some embodiments of this application. In the process 600, a first terminal device 210 and a second terminal device 220 are included, and it is assumed that the first terminal device 210 is a subband non-overlapping full-duplex device (full-duplex device for short). It may be understood that the subband non-overlapping full-duplex device has a capability of simultaneously receiving and sending data in two different frequency bands. In other words, at the same time, the subband non-overlapping full-duplex device can perform receiving in one frequency band and perform sending in the other frequency band.

The first terminal device 210 obtains indication information 610, where the indication information may indicate a time-frequency resource for a data channel and a time-frequency resource for a feedback channel. For example, the indication information may further indicate a correspondence between a time-frequency resource a and a time-frequency resource b. The time-frequency resource a may be a first time-frequency resource, the time-frequency resource b may be a second time-frequency resource, the first time-frequency resource is a time-frequency resource occupied by a first data channel, and the second time-frequency resource is a time-frequency resource occupied by a first feedback channel. Alternatively, the time-frequency resource a may be a ninth time-frequency resource, the time-frequency resource b may be a tenth time-frequency resource, the ninth time-frequency resource is a time-frequency resource occupied by a first data channel, and the tenth time-frequency resource is a time-frequency resource occupied by a first feedback channel.

For example, a data channel may be a PSSCH, and a feedback channel may be a PSFCH. Optionally, the indication information may be represented in a form of a bitmap, and a length of the bitmap may be determined based on a quantity of resource units of the feedback channel. The resource unit includes a time domain resource unit, a frequency domain resource unit, and a code domain resource unit. For example, the time domain resource unit includes a slot, a symbol, or the like, the frequency domain resource unit includes a PRB, a resource element (Resource Element, RE), or the like, and the code domain resource unit includes an orthogonal code (for example, a Walsh code), or the like. For the bitmap, refer to the following related descriptions with reference to first information, third information, and the like.

In some examples, the indication information may be preconfigured or prestored. For example, the indication information may be predetermined and sent to the first terminal device 210 and/or the second terminal device 220 by a network device. For example, the network device preconfigures the indication information by using layer 1 signaling, layer 3 signaling, or the like. In some examples, the indication information may be determined by the first terminal device 210 or the second terminal device 220 and notified to the other party. For example, the first terminal device 210 may obtain preconfigured indication information and send the indication information to the second terminal device 220. For example, the second terminal device 220 may obtain preconfigured indication information and send the indication information to the first terminal device 210. Correspondingly, the first terminal device 210 may receive the indication information from the second terminal device 220.

In some examples, the indication information may indicate inter-subband feedback. In some other examples, the indication information may indicate intra-subband feedback.

In some embodiments, the indication information may be the first information. The first information indicates a time-frequency resource occupied by a first data channel and a time-frequency resource occupied by a first feedback channel, the first data channel is located in a first frequency band, the first feedback channel is located in a second frequency band, the first feedback channel includes acknowledgment information of the first data channel, and the first frequency band and the second frequency band do not overlap in frequency domain. The first information may further indicate a time-frequency resource occupied by a second data channel and a time-frequency resource occupied by a second feedback channel. The second data channel is located in the second frequency band, the second feedback channel is located in the first frequency band, and the second feedback channel includes acknowledgment information of the second data channel. Optionally, the first information may also be understood as an inter-subband feedback indication.

In an example, the time-frequency resource occupied by the first data channel may be indicated as one or more data channel units of the first data channel, where the data channel unit is, for example, a subchannel. The time-frequency resource occupied by the first feedback channel may be indicated as one or more resource units of the first feedback channel, where the resource unit includes, for example, the time domain resource unit, the frequency domain resource unit, and the code domain resource unit. The first information may indicate M1 data channel units of the first data channel and N1 resource units of the first feedback channel. Similarly, the first information may further indicate M2 data channel units of the second data channel and N2 resource units of the second feedback channel. It may be understood that M1, M2, N1, and N2 are positive integers (that is, integers greater than 0). For example, M1 depends on a bandwidth of the first data channel and a division manner of the data channel unit, and M2 depends on a bandwidth of the second data channel and a division manner of the data channel unit. The division manner of the data channel unit is predefined or preconfigured. For example, the bandwidth of the data channel unit (for example, the subchannel) is fixed. N1 depends on a quantity of resource units included in the first feedback channel, and N2 depends on a quantity of resource units included in the second feedback channel.

For example, the first information may indicate the following content: The first terminal device 210 expects to send the first data channel in the first frequency band and receive the first feedback channel in the second frequency band; the first terminal device 210 does not expect to receive the first data channel in the first frequency band; and the second terminal device 220 expects to receive the second data channel in the second frequency band and send the second feedback channel in the first frequency band.

Optionally, as shown in FIG. 6, the first terminal device 210 may further send second information 602 to the second terminal device 220. The second information may indicate a device type of the first terminal device 210. Specifically, the device type of the first terminal device 210 is a full-duplex device. Similarly, the second terminal device 220 may send fourth information 604 to the first terminal device 210. The fourth information may indicate a device type of the second terminal device 220. For example, the device type of the second terminal device 220 is a full-duplex device or a half-duplex device.

Optionally, the second information may further indicate a transmit frequency band of the first terminal device 210 and/or a receive frequency band of the first terminal device 210.

In an implementation, for example, the second information may further indicate that the first frequency band is a transmit frequency band of the first terminal device 210, and a second frequency band is the receive frequency band of the first terminal device 210. If the second terminal device 220 is a full-duplex device, optionally, the fourth information may further indicate that the first frequency band is a receive frequency band of the second terminal device 220, and the second frequency band is a transmit frequency band of the second terminal device 220. It may be understood that the transmit frequency band and the receive frequency band may be determined by the first terminal device 210 and the second terminal device 220 through negotiation. For example, the first terminal device 210 and the second terminal device 220 may negotiate to determine the transmit frequency band and the receive frequency band through one or more rounds of information exchange. It is assumed that a result determined through negotiation is that the second frequency band is the receive frequency band of the first terminal device 210 and the transmit frequency band of the second terminal device 220, and the first frequency band is the transmit frequency band of the first terminal device 210 and the receive frequency band of the second terminal device 220.

In another implementation, for example, the second information may further indicate that the second frequency band is a transmit frequency band of the first terminal device 210, and the first frequency band is a receive frequency band of the first terminal device 210. In an implementation, the second information may indicate that the first terminal device 210 is to receive the feedback channel in a first time period by using the first frequency band. If the second terminal device 220 is a full-duplex device, optionally, the fourth information may further indicate that the second frequency band is a receive frequency band of the second terminal device 220, and the first frequency band is a transmit frequency band of the second terminal device 220. It may be understood that the transmit frequency band and the receive frequency band may be determined by the first terminal device 210 and the second terminal device 220 through negotiation. For example, the first terminal device 210 and the second terminal device 220 may negotiate to determine the transmit frequency band and the receive frequency band through one or more rounds of information exchange. It is assumed that a result determined through negotiation is that the first frequency band is the receive frequency band of the first terminal device 210 and the transmit frequency band of the second terminal device 220, and the second frequency band is the transmit frequency band of the first terminal device 210 and the receive frequency band of the second terminal device 220.

The negotiation process may include a plurality of optional solutions. The negotiation process is applicable to any negotiation process in this application, and is not limited herein.

For example,
1. when the transmit frequency band of the first terminal device indicated in the second information and the receive frequency band of the second terminal device indicated in the fourth information are a same frequency band, or when the receive frequency band of the first terminal device indicated in the second information and the transmit frequency band of the second terminal device indicated in the fourth information are a same frequency band, the first terminal device and the second terminal device respectively configure the receive frequency band and the transmit frequency band in the second information sent by the first terminal device or the fourth information sent by the second terminal device as respective receive frequency bands and transmit frequency bands; and
2. when the transmit frequency band of the first terminal device indicated in the second information and the receive frequency band of the second terminal device indicated in the fourth information are different frequency bands, or when the receive frequency band of the first terminal device indicated in the second information and the transmit frequency band of the second terminal device indicated in the fourth information are different frequency bands, the first terminal device and the second terminal device determine the respective receive frequency bands and transmit frequency bands based on a time sequence and/or frequency domain positions of respectively sending the second information and the fourth information. Specifically, the process may include:
   (1) When the second information and the fourth information are sent in a same frequency band at different time,
      1.1. when sending time of the second information is earlier than sending time of the fourth information, the first terminal device configures a receive frequency band and a transmit frequency band of the first terminal device based on the second information, and the second terminal device configures a transmit frequency band of the first terminal device indicated in the second information as the receive frequency band of the second terminal device, and configures the receive frequency band of the first terminal device indicated in the second information as a transmit frequency band of the second terminal device; and
      1.2. when sending time of the second information is later than sending time of the fourth information, the first terminal device configures a receive frequency band and a transmit frequency band of the first terminal device based on the second information, and the second terminal device configures a transmit frequency band of the first terminal device indicated in the second information as the receive frequency band of the second terminal device, and configures the receive frequency band of the first terminal device indicated in the second information as a transmit frequency band of the second terminal device.
   (2) When the second information and the fourth information are sent in different frequency bands at the same time,
      2.1. the first terminal device configures a frequency band for sending the second information as a transmit frequency band, and configures a frequency band for receiving the fourth information as a receive frequency band; and the second terminal device configures a frequency band for sending the fourth information as a transmit frequency band, and configures a frequency band for receiving the second information as a receive frequency band; or
      2.2. the first terminal device configures a frequency band for sending the second information as a receive frequency band, and configures a frequency band for receiving the fourth information as a transmit frequency band; and the second terminal device configures a frequency band for sending the fourth information as a receive frequency band, and configures a frequency band for receiving the second information as a transmit frequency band.
   (3) When the second information and the fourth information are sent in different frequency bands at different time,
      3.1. when sending time of the second information is earlier than sending time of the fourth information, the first terminal device configures a receive frequency band and a transmit frequency band of the first terminal device based on the second information, and the second terminal device configures the transmit frequency band of the first terminal device indicated in the second information as the receive frequency band of the second terminal device, and configures the receive frequency band of the first terminal device indicated in the second information as the transmit frequency band of the second terminal device; and
      3.2. when sending time of the second information is later than sending time of the fourth information, the first terminal device configures a receive frequency band and a transmit frequency band of the first terminal device based on the second information, and the second terminal device configures the transmit frequency band of the first terminal device indicated in the second information as the receive frequency band of the second terminal device, and configures the receive frequency band of the first terminal device indicated in the second information as the transmit frequency band of the second terminal device; or
      3.3. the first terminal device configures a frequency band for sending the second information as a transmit frequency band, and configures a frequency band for receiving the fourth information as a receive frequency band; and the second terminal device configures a frequency band for sending the fourth information as a transmit frequency band, and configures a frequency band for receiving the second information as a receive frequency band; or
      3.4. the first terminal device configures a frequency band for sending the second information as a receive frequency band, and configures a frequency band for receiving the fourth information as a transmit frequency band; and the second terminal device configures a frequency band for sending the fourth information as a receive frequency band, and configures a frequency band for receiving the second information as a transmit frequency band.

In another example, for example:
1. when the transmit frequency band of the first terminal device indicated in the second information and the receive frequency band of the second terminal device indicated in the fourth information are a same frequency band, or when the receive frequency band of a first terminal device indicated in the second information and the transmit frequency band of the second terminal device indicated in the fourth information are a same frequency band, the first terminal device and the second terminal device respectively configure the receive frequency band and the transmit frequency band in the second information sent by the first terminal device or the fourth information sent by the second terminal device as respective receive frequency bands and transmit frequency bands; and
2. when the transmit frequency band of the first terminal device indicated in the second information and the receive frequency band of the second terminal device indicated in the fourth information are different frequency bands, or when the receive frequency band of the first terminal device indicated in the second information and the transmit frequency band of the second terminal device indicated in the fourth information are different frequency bands, that the first terminal device and the second terminal device determine that the first terminal device or the second terminal device is a negotiation terminal device based on a time sequence and/or frequency domain positions of respectively sending the second information and the fourth information, and the negotiation terminal device determines receive frequency bands and transmit frequency bands of the first terminal device or the second terminal device, and notifies the other terminal device includes:
   (1) When the second information and the fourth information are sent in a same frequency band at different time,
      1.1. when sending time of the second information is earlier than sending time of the fourth information, the first terminal device and the second terminal device determine that the first terminal device is a negotiation terminal device, and the negotiation terminal device determines a transmit/receive frequency band of the negotiation terminal device, and notifies the second terminal device that a receive frequency band of the second terminal device is the transmit frequency band of the negotiation terminal device, and the transmit frequency band of the second terminal device is the receive frequency band of the negotiation terminal device; or
      1.2. when sending time of the second information is later than sending time of the fourth information, the first terminal device and the second terminal device determine that the first terminal device is a negotiation terminal device, and the negotiation terminal device determines a transmit/receive frequency band of the negotiation terminal device, and notifies the second terminal device that a receive frequency band of the second terminal device is the transmit frequency band of the negotiation terminal device, and the transmit frequency band of the second terminal device is the receive frequency band of the negotiation terminal device.
   (2) When the second information and the fourth information are sent in different frequency bands at the same time,
      2.1. if a frequency band in which the second information is located is higher than a frequency band in which the fourth information is located, the first terminal device and the second terminal device determine that the first terminal device is a negotiation terminal device, and the negotiation terminal device determines a transmit/receive frequency band of the negotiation terminal device, and notifies the second terminal device that a receive frequency band of the second terminal device is the transmit frequency band of the negotiation terminal device, and the transmit frequency band of the second terminal device is the receive frequency band of the negotiation terminal device; or
      2.2. if a frequency band in which the second information is located is lower than a frequency band in which the fourth information is located, the first terminal device and the second terminal device determine that the first terminal device is a negotiation terminal device, and the negotiation terminal device determines a transmit/receive frequency band of the negotiation terminal device, and notifies the second terminal device that a receive frequency band of the second terminal device is the transmit frequency band of the negotiation terminal device, and the transmit frequency band of the second terminal device is the receive frequency band of the negotiation terminal device.
   (3) When the second information and the fourth information are sent in different frequency bands at different time,
      3.1. when sending time of the second information is earlier than sending time of the fourth information, the first terminal device and the second terminal device determine that the first terminal device is a negotiation terminal device, and the negotiation terminal device determines a transmit/receive frequency band of the negotiation terminal device, and notifies the second terminal device that a receive frequency band of the second terminal device is the transmit frequency band of the negotiation terminal device, and the transmit frequency band of the second terminal device is the receive frequency band of the negotiation terminal device; or
      3.2. when sending time of the second information is later than sending time of the fourth information, the first terminal device and the second terminal device determine that the first terminal device is a negotiation terminal device, and the negotiation terminal device determines a transmit/receive frequency band of the negotiation terminal device, and notifies the second terminal device that a receive frequency band of the second terminal device is the transmit frequency band of the negotiation terminal device, and the transmit frequency band of the second terminal device is the receive frequency band of the negotiation terminal device; or
      3.3. if a frequency band in which the second information is located is higher than a frequency band in which the fourth information is located, the first terminal device and the second terminal device determine that the first terminal device is a negotiation terminal device, and the negotiation terminal device determines a transmit/receive frequency band of the negotiation terminal device, and notifies the second terminal device that a receive frequency band of the second terminal device is the transmit frequency band of the negotiation terminal device, and the transmit frequency band of the second terminal device is the receive frequency band of the negotiation terminal device; or
      3.4. if a frequency band in which the second information is located is lower than a frequency band in which the fourth information is located, the first terminal device and the second terminal device determine that the first terminal device is a negotiation terminal device, and the negotiation terminal device determines a transmit/receive frequency band of the negotiation terminal device, and notifies the second terminal device that a receive frequency band of the second terminal device is the transmit frequency band of the negotiation terminal device, and the transmit frequency band of the second terminal device is the receive frequency band of the negotiation terminal device.

It should be understood that, in different scenarios, the transmit frequency band and the receive frequency band indicated by the second information may be different. For example, in some scenarios, the first frequency band is a transmit frequency band of the first terminal device 210, and in some other scenarios, the second frequency band is a transmit frequency band of the first terminal device 210. This is not limited in this application. It should be noted that in the following embodiments, for different scenarios, in different descriptions, which frequency band is a transmit frequency band is not specifically specified, and is not specially emphasized in the following.

The second information may be included in a control channel or a data channel, for example, a PSCCH or a PSSCH. This is not limited in this application.

It may be understood that the indication of the second information for the first time period may be implicit. For example, the first time period may be determined based on a second time period for sending the second information, a feedback periodicity (that is, N), a minimum quantity of slots (K) for feedback, and the like.

In addition or optionally, the second information may further indicate valid duration, so that the first terminal device 210 receives information in the first frequency band and sends information in the second frequency band within valid duration starting from a moment at which the second information is sent. This can improve flexibility.

It may be understood that if the second terminal device 220 is a half-duplex device, the second terminal device 220 may restrict, based on the second information, the transmit frequency band of the second terminal device 220 to the first frequency band. In this way, the first terminal device 210 can be prevented from receiving information from the second terminal device 220 in the second frequency band.

For brevity of illustration, with reference to FIG. 4 or FIG. 5, it may be assumed that the first frequency band is a subband 1, and the second frequency band is a subband 2. In this case, a meaning of the second information may be understood as follows: The first terminal device 210 sends information in the subband 2 during a slot n to a slot n+3, and receives information in the subband 1. Correspondingly, for the information sent during the slot n to the slot n+3, an acknowledgment is received in the subband 1, and for the information received during the slot n to the slot n+3, an acknowledgment is sent in the subband 2.

In this embodiment of this application, the time-frequency resource occupied by the first feedback channel may be represented by using an index of one or more resource units (which may also be referred to as a feedback channel unit) of the first feedback channel. For example, it is assumed that the resource unit is a PRB, at least one resource unit may be indicated by using an index of the PRB. For example, it is assumed that the first frequency band includes eight PRBs in the first time period, 000 and 001 may indicate that the at least one resource unit is two PRBs at a lowest frequency in the first frequency band, and 110 and 111 may indicate that the at least one resource unit is two PRBs at a highest frequency in the first frequency band.

Optionally, a part or all of the first information may be configured in a form of a bitmap (bitmap), where a length of the bitmap is determined based on at least a quantity of resource units included in the PSFCH. For example, the length of the bitmap may be equal to a total quantity of resource units in the first frequency band in the first time period. The resource unit may include the time domain resource unit, for example, a quantity of valid symbols of the PSFCH. The resource unit may include the frequency domain resource unit, for example, a quantity of PRBs included in a single symbol. The resource unit may include the code domain resource unit, for example, a quantity of cyclic shift pairs.

For example, for the subband 1, a bitmap 1 may be configured, and a length of the bitmap 1 is determined based on the following factors: a quantity *m*_{*PSFCH*,2} of valid symbols of a PSFCH in a single slot in which the subband 2 includes the PSFCH, a quantity *m*_{*PRB,*2} of PRBs included in the subband 2, and a quantity *m_{cs}* of cyclic shift pairs. For example, the length of the bitmap 1 may be equal to *m*_{*PSFCH*,2} × *m*_{*PRB,*2} × *m_{cs},* where each bit corresponds to one PRB on one PSFCH symbol in the subband 2 and a corresponding cyclic shift sequence number. In an example, with reference to FIG. 4 or FIG. 5, it is assumed that a quantity of PRBs included in a PSFCH in the subband 2 is 8, the bitmap 1 configured for the subband 1 may be shown in FIG. 7. FIG. 7 is a diagram of the bitmap 1 configured for the subband 1 according to some embodiments of this application. In 700, it may be assumed that sequence numbers of PRBs are 1 to 8, and correspond to PRBs from a low frequency to a high frequency in the subband 2. 710 in the bitmap 1 corresponds to a slot n shown in FIG. 4 or FIG. 5, that is, feedback information of information transmitted in the slot n of the subband 1 is transmitted on two low-frequency PRBs of the subband 1. In addition, 720 in the bitmap 1 is for a slot n+1, 730 in the bitmap 1 is for a slot n+2, and 740 in the bitmap 1 is for a slot n+3.

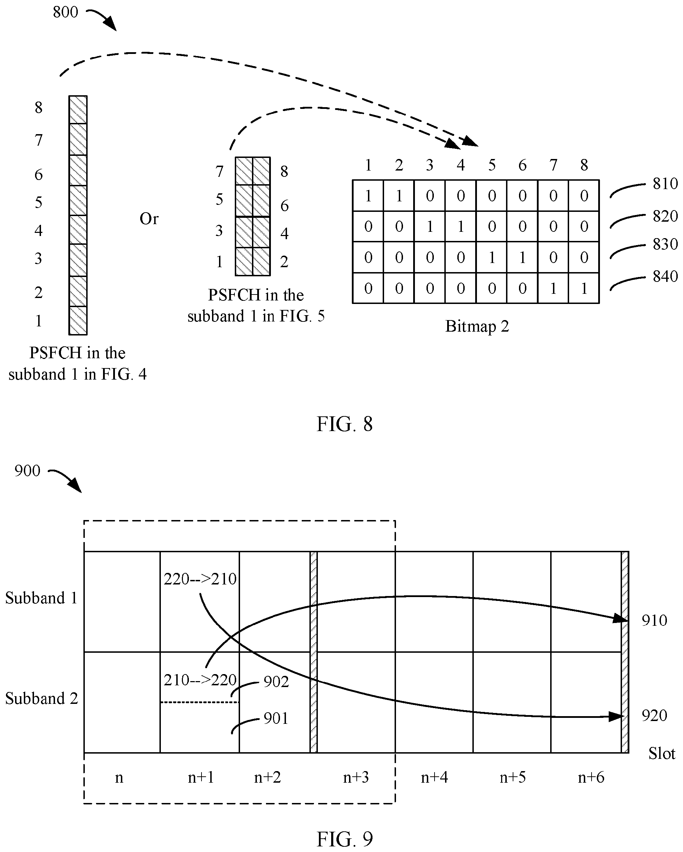

For example, for the subband 2, a bitmap 2 may be configured, and a length of the bitmap 2 is determined based on the following factors: a quantity *m*_{*PSFCH*,1} of valid symbols of a PSFCH in a single slot in which the subband 1 includes the PSFCH, a quantity *m*_{*PRB*,1} of PRBs included in the subband 1, and a quantity *m_{cs}* of cyclic shift pairs. For example, the length of the bitmap 2 may be equal to *m*_{*PSFCH*,1} × *m*_{*PRB*,1} × *m_{cs},* where each bit corresponds to one PRB on one PSFCH symbol in the subband 1 and a corresponding cyclic shift sequence number. In an example, with reference to FIG. 4 or FIG. 5, it is assumed that a quantity of PRBs included in a PSFCH in the subband 1 is 8, the bitmap 2 configured for the subband 2 may be shown in FIG. 8. FIG. 8 is a diagram of the bitmap 2 configured for the subband 2 according to some embodiments of this application. In 800, it may be assumed that sequence numbers of PRBs are 1 to 8, and correspond to PRBs from low frequency to high frequency in the subband 1. In FIG. 8, 810 in the bitmap 2 corresponds to a slot n shown in FIG. 4 or FIG. 5, that is, feedback information of information transmitted in the slot n of the subband 2 is transmitted on two low-frequency PRBs of the subband 2. In addition, 820 in the bitmap 2 is for a slot n+1, 830 in the bitmap 2 is for a slot n+2, and 840 in the bitmap 2 is for a slot n+3.

For example, for the subband 1 and the subband 2, a bitmap may be configured, and a length of the bitmap is determined based on the following factors: the quantity *m*_{*PSFCH*,1} of valid symbols of the PSFCH in the single slot in which the subband 1 includes the PSFCH, the quantity *m*_{*PRB*,1} of PRBs included in the subband 1, and the quantity of cyclic shift pairs *m_{cs};* and the quantity *m*_{*PSFCH*,2} of valid symbols of the PSFCH in the single slot in which the subband 2 includes the PSFCH, the quantity *m*_{*PRB,*2} of PRBs included in the subband 2, and the quantity *m_{cs}* of cyclic shift pairs. For example, the length of the bitmap may be equal to *m*_{*PSFCH,*1} × *m*_{*PRB,*1} × *m_{cs} + m*_{*PSFCH*,2} × *mM*_{*PRB*,2} × *m_{cs},* where each bit corresponds to one PRB on one PSFCH symbol in the subband 1 and subband 2 and a corresponding cyclic shift sequence number. In an example, it is assumed that a quantity of PRBs included in the PSFCH in the subband 1 is 8, and a quantity of PRBs included in the PSFCH in the subband 2 is 8. In this case, optionally, a length of the bitmap may be 16 bits. For example, 1 bit to 8 bits correspond to 8 PRBs in the subband 2, and 9 bits to 16 bits correspond to 8 PRBs in the subband 1.

It should be understood that FIG. 7 or FIG. 8 is only an example, and should not be construed as a limitation on embodiments of this application. For example, in another example, sequence numbers of PRBs may be numbered in another order. For example, in another example, a quantity of fed-back PRBs (that is, a quantity of "1"s in 710 or 810) corresponding to a slot (for example, the slot n) may be one or more.

In some other embodiments, the indication information may be the third information, the third information indicates a time-frequency resource occupied by a first data channel and a time-frequency resource occupied by a second feedback channel, the first data channel and the second feedback channel are located in a first frequency band, and the second feedback channel includes acknowledgment information of the first data channel. The first information may further indicate a time-frequency resource occupied by a second data channel and a time-frequency resource occupied by a first feedback channel, the second data channel and the first feedback channel are located in a second frequency band, and the first feedback channel includes acknowledgment information of the second data channel. Optionally, the third information may also be understood as an indication of the intra-subband feedback.

In an example, the time-frequency resource occupied by the first data channel may be indicated as one or more data channel units of the first data channel, where the data channel unit is, for example, a subchannel. The time-frequency resource occupied by the second feedback channel may be indicated as one or more resource units of the second feedback channel, where the resource unit includes, for example, the time domain resource unit, the frequency domain resource unit, and the code domain resource unit. The third information may indicate M1 data channel units of the first data channel and N2 resource units of the second feedback channel. Similarly, the third information may further indicate M2 data channel units of the second data channel and N1 resource units of the first feedback channel.

Similar to the foregoing description with reference to the first information, the resource unit of the first/second feedback channel in the third information may be represented by using an index. Optionally, a part or all of the third information may be configured in a form of a bitmap, where a length of the bitmap is determined based on at least a quantity of resource units included in the PSFCH. The resource unit may include the time domain resource unit, for example, a quantity of valid symbols of the PSFCH. The resource unit may include the frequency domain resource unit, for example, a quantity of PRBs included in a single symbol. The resource unit may include the code domain resource unit, for example, a quantity of cyclic shift pairs.

In some other embodiments, the indication information may include the first information and the third information. The first information and the third information may be described above. In other words, the indication information may include an indication of the intra-subband feedback and an indication of the inter-subband feedback. In addition, a part or all of the indication information may also be configured in a form of a bitmap.

For example, for a subband 1, a bitmap 1-1 and a bitmap 1-2 may be configured, where the bitmap 1-1 is an intra-subband bitmap, and the bitmap 1-2 is an inter-subband bitmap. A length of the bitmap 1-1 is determined based on the following factors: a quantity *m*_{*PSFCH*,1} of valid symbols of a PSFCH in a single slot in which the subband 1 includes the PSFCH, a quantity *m*_{*PRB*,1} of PRBs included in the subband 1, and a quantity *m_{cs}* of cyclic shift pairs. For example, the length of the bitmap 1-1 may be equal to *m*_{*PSFCH*,1} × *m*_{*PRB*,1} × *m_{cs}.* A length of the bitmap 1-2 is determined based on the following factors: a quantity *m*_{*PSFCH*,2} of valid symbols of a PSFCH in a single slot in which a subband 2 includes the PSFCH, a quantity *m*_{*PRB,*2} of PRBs included in the subband 2, and a quantity *m_{cs}* of cyclic shift pairs. For example, the length of the bitmap 1-2 may be equal to *m*_{*PSFCH*,2} × *m*_{*PRB*,2} × *m_{cs}.*

In an example, with reference to FIG. 4 or FIG. 5, it is assumed that a quantity of PRBs included in the PSFCH in the subband 1 is 8, and a quantity of PRBs included in the PSFCH in the subband 2 is 8. With reference to the foregoing embodiment, the bitmap 1-1 is similar to the bitmap 2 shown in FIG. 8, and the bitmap 1-2 is similar to the bitmap 1 shown in FIG. 7.

For example, for the subband 2, a bitmap 2-1 and a bitmap 2-2 may be configured, where the bitmap 2-1 is an intra-subband bitmap, and the bitmap 2-2 is an inter-subband bitmap. A length of the bitmap 2-1 is determined based on the following factors: a quantity *m*_{*PSFCH*,2} of valid symbols of a PSFCH in a single slot in which the subband 2 includes the PSFCH, a quantity *m*_{*PRB,*2} of PRBs included in the subband 2, and a quantity *m_{cs}* of cyclic shift pairs. For example, the length of the bitmap 2-1 may be equal to *m*_{*PSFCH*,2} × *m*_{*PRB,*2} × *m_{cs}.* A length of the bitmap 2-2 is determined based on the following factors: a quantity *m*_{*PSFCH*,1} of valid symbols of a PSFCH in a single slot in which the subband 1 includes the PSFCH, a quantity *m*_{*PRB*,1} of PRBs included in the subband 1, and a quantity *m_{cs}* of cyclic shift pairs. For example, the length of the bitmap 2-2 may be equal to *m*_{*PSFCH*,1} × *m*_{*PRB*,1} × *m_{cs}.*

In an example, with reference to FIG. 4 or FIG. 5, it is assumed that a quantity of PRBs included in the PSFCH in the subband 1 is 8, and a quantity of PRBs included in the PSFCH in the subband 2 is 8. With reference to the foregoing embodiment, the bitmap 2-1 is similar to the bitmap 1 shown in FIG. 7, and the bitmap 2-2 is similar to the bitmap 2 shown in FIG. 8.

For example, for the subband 1 and the subband 2, a bitmap a and a bitmap b may be configured together, where the bitmap a is an intra-subband bitmap, and the bitmap b is an inter-subband bitmap. In addition, a length of the bitmap a and the bitmap b is determined based on the following factors: the quantity *m*_{*PSFCH*,1} of valid symbols of the PSFCH in the single slot in which the subband 1 includes the PSFCH, the quantity *m*_{*PRB*,1} of PRBs included in the subband 1, and the quantity of cyclic shift pairs *m_{cs};* and the quantity *m*_{*PSFCH*,2} of valid symbols of the PSFCH in the single slot in which the subband 2 includes the PSFCH, the quantity *m*_{*PRB,*2} of PRBs included in the subband 2, and the quantity *m_{cs}* of cyclic shift pairs. For example, the length of the bitmap a and the bitmap b may be equal to *m*_{*PSFCH*,1} × *m*_{*PRB*,1} × *m_{cs} + m*_{*PSFCH*,2} × *m*_{*PRB,*2} × *m_{cs}.* In an example, it is assumed that a quantity of PRBs included in the PSFCH in the subband 1 is 8, and a quantity of PRBs included in the PSFCH in the subband 2 is 8. In this case, optionally, a length of the bitmap a and the bitmap b may be 16 bits. For example, 1 bit to 8 bits correspond to the 8 PRBs in the subband 2, and 9 bits to 16 bits correspond to the 8 PRBs in the subband 1.

Optionally, the indication information may indicate, by using an identifier of a bitmap, a frequency band in which the first terminal device receives the feedback channel. For example, the indication information indicates, by using an identifier of a bitmap 1-1 or a bitmap 2-2, that a frequency band in which an acknowledgment channel is received is the subband 1. Optionally, the indication information may indicate, based on a relationship between a frequency band for sending information and a frequency band for receiving an acknowledgment channel, a frequency band in which the first terminal device receives the feedback channel. For example, the indication information may indicate that the transmit frequency band of the first terminal device 210 is a subband 2. In this case, an indication such as "inter-subband receiving" may be used to indirectly or implicitly indicate that the frequency band for receiving the acknowledgment channel is the subband 1. For example, in the indication information, 1 bit in a specific field may indicate intra-subband receiving or inter-subband receiving. For example, "1" indicates intra-subband receiving, and "0" indicates inter-subband receiving.

The first terminal device 210 determines, based on the indication information, a mapping relationship between the time-frequency resource of data and a corresponding fed-back time-frequency resource.

For example, the first terminal device 210 may determine a first mapping relationship based on the first information. The first mapping relationship may include a first time-frequency resource on which the first terminal device 210 sends the first data channel and a second time-frequency resource on which the first terminal device 210 receives the first feedback channel. For example, the first mapping relationship may indicate a mapping relationship between the first time-frequency resource and the second time-frequency resource. It may be understood that, compared with the time-frequency resource occupied by the first data channel and the time-frequency resource occupied by the first feedback channel that are indicated by the first information, the first time-frequency resource is a part or all of the time-frequency resource occupied by the first data channel. Similarly, the second time-frequency resource is a part or all of the time-frequency resource occupied by the first feedback channel.

Optionally, the first mapping relationship may include a third time-frequency resource on which the first terminal device 210 receives the second data channel and a fourth time-frequency resource on which the first terminal device 210 sends the second feedback channel. For example, the first mapping relationship may further indicate a mapping relationship between the third time-frequency resource and the fourth time-frequency resource. It may be understood that, compared with the time-frequency resource occupied by the second data channel and the time-frequency resource occupied by the second feedback channel that are indicated by the first information, the third time-frequency resource is a part or all of the time-frequency resource occupied by the second data channel. Similarly, the fourth time-frequency resource is a part or all of the time-frequency resource occupied by the second feedback channel.

Specifically, the first terminal device 210 may determine, based on the first information, a sequence number of a symbol in which a PSFCH corresponding to information such as a time-frequency resource of the PSSCH is located, a sequence number of a PRB, and a sequence number of a cyclic shift.

The first terminal device 210 may determine the first mapping relationship based on the first information and the identifier of the first terminal device 210. For example, it is assumed that the first terminal device 210 sends the first data channel in the subband 1 in the slot n. It is assumed that the first information indicates a time-frequency resource of the first feedback channel corresponding to the first data channel in the slot n, as shown in 810, that is, indicates two PRBs numbered 1 and 2 on the PSFCH. The first terminal device 210 may determine a result obtained by performing modulo calculation on an identifier of the first terminal device 210 and a predetermined value (for example, 2), for example, 0 or 1, and may determine a second time-frequency resource of the first feedback channel based on the result. For example, if a result is 0, a PRB numbered 1 is determined as the second time-frequency resource. For example, if a result is 1, a PRB numbered 2 is determined as the second time-frequency resource. For example, it is assumed that the first terminal device 210 sends the first data channel on a first subchannel (for example, a low-frequency subchannel in the subband 1) in the subband 1 in a slot n. It is assumed that the first information indicates time-frequency resources of the first feedback channel corresponding to the two subchannels on the first data channel in the slot n, as shown in 810, that is, indicates two PRBs numbered 1 and 2 on the PSFCH. The first terminal device 210 may determine the second time-frequency resource of the first feedback channel based on the first subchannel to be used by the first terminal device 210. For example, if the first subchannel is a low-frequency subchannel of a subband 1, the PRB numbered 1 is determined as the second time-frequency resource. For example, if the first subchannel is a high-frequency subchannel of a subband 1, the PRB numbered 2 is determined as the second time-frequency resource.

It may be understood that, for another case, the sent time-frequency resource and the received time-frequency resource in the first mapping relationship may be similarly determined, and are not listed one by one herein.

For example, the first terminal device 210 may determine a second mapping relationship based on the third information. The second mapping relationship may include a fifth time-frequency resource on which the first terminal device 210 sends the first data channel and a sixth time-frequency resource on which the first terminal device 210 receives the second feedback channel. For example, the second mapping relationship may indicate a mapping relationship between the fifth time-frequency resource and the sixth time-frequency resource. It may be understood that, compared with the time-frequency resource occupied by the first data channel and the time-frequency resource occupied by the second feedback channel that are indicated by the third information, the fifth time-frequency resource is a part or all of the time-frequency resource occupied by the first data channel. Similarly, the sixth time-frequency resource is a part or all of the time-frequency resource occupied by the second feedback channel.

Optionally, the second mapping relationship may include a seventh time-frequency resource on which the first terminal device 210 receives the second data channel and an eighth time-frequency resource on which the first terminal device 210 sends the first feedback channel. For example, the second mapping relationship may indicate a mapping relationship between the seventh time-frequency resource and the eighth time-frequency resource. It may be understood that, compared with the time-frequency resource occupied by the second data channel and the time-frequency resource occupied by the first feedback channel that are indicated by the third information, the seventh time-frequency resource is a part or all of the time-frequency resource occupied by the second data channel. Similarly, the eighth time-frequency resource is a part or all of the time-frequency resource occupied by the first feedback channel.

It may be understood that a manner in which the first terminal device 210 determines the second mapping relationship is similar to the foregoing manner in which the first mapping relationship is determined, and a difference mainly lies in an intra-subband resource mapping indicated in the second mapping relationship. For brevity, details are not described herein again.

The first terminal device 210 performs communication 630 with the second terminal device 220 based on the first mapping relationship and/or the second mapping relationship.

Based on the first mapping relationship

In some embodiments, the first terminal device 210 sends, on the first time-frequency resource in the first frequency band, the first data channel to the second terminal device 220. In addition, the first terminal device 210 may receive, on the second time-frequency resource in the second frequency band, the first feedback channel from the second terminal device 220 based on the first mapping relationship.

Optionally, the first terminal device 210 may further receive, in the second frequency band, the second data channel from the second terminal device 220, and may send the second feedback channel to the second terminal device 220 in the first frequency band based on the first mapping relationship.

It may be understood that sending a data channel in this embodiment of this application indicates that data is sent through the data channel. In other words, the sent data is included on the data channel, for example, a PSSCH. Receiving an acknowledgment channel in this embodiment of this application indicates that acknowledgment information is received through a feedback channel. In other words, the received acknowledgment information is included on the feedback channel, for example, a PSFCH. Similarly, receiving a data channel in this embodiment of this application indicates that data is received through the data channel. In other words, the received data is included on the data channel, for example, a PSSCH. Sending an acknowledgment channel in this embodiment of this application indicates that acknowledgment information is sent through a feedback channel. In other words, the sent acknowledgment information is included on the feedback channel, for example, a PSFCH.

If the second terminal device 220 is a full-duplex device, the first terminal device 210 may send the first data channel and receive the second data channel in a same time unit (for example, a slot). In this way, a capability of the full-duplex device can be fully utilized. Correspondingly, the first terminal device 210 may simultaneously receive the first feedback channel and send the second feedback channel. For example, time periods of the first feedback channel and the second feedback channel may completely overlap, for example, in the case of symmetric subbands shown in FIG. 4; or time periods of the first feedback channel and the second feedback channel may partially overlap, for example, in the case of asymmetric subbands shown in FIG. 5. In addition, it may be understood that, based on the first mapping relationship, the first terminal device 210 receives the first feedback channel in the second frequency band and sends the second feedback channel in the first frequency band. In this way, a conflict in simultaneous receiving/sending in a same frequency band can be avoided.

If the second terminal device 220 is a full-duplex device, the first data channel and the second data channel may be in different time units (for example, at least one slot or at least one symbol). For example, the time unit may include one slot or a plurality of symbols. In this case, the time periods of the first feedback channel and the second feedback channel may completely overlap, partially overlap, or completely do not overlap. This is not limited in this application.

If the second terminal device 220 is a half-duplex device, the first data channel and the second data channel may be in different time units (for example, a slot). In this way, correct communication of the second terminal device 220 can be ensured.

For ease of description, it may be assumed that a time unit in which the first terminal device 210 sends the first data channel is one slot, and a time length of the first feedback channel received by the first terminal device 210 is one symbol, two symbols, or the like.

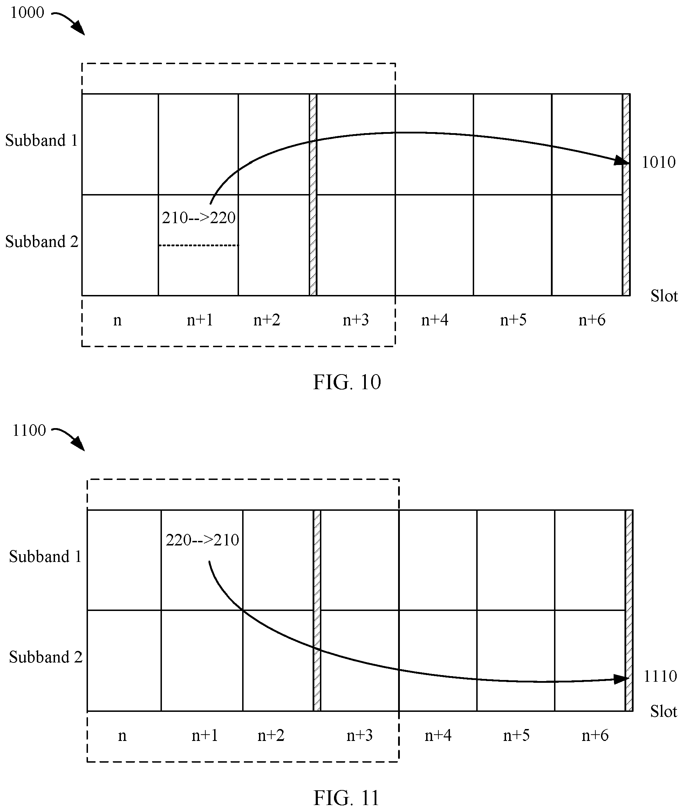

In some examples, it is assumed that the first frequency band is a subband 2, and the second frequency band is a subband 1. FIG. 9 is a diagram of communication 900 between a first terminal device 210 and a full-duplex second terminal device 220. FIG. 10 is a diagram of communication 1000 between a first terminal device 210 and a half-duplex second terminal device 220. FIG. 11 is a diagram of communication 1100 between a first terminal device 210 and a half-duplex second terminal device 220.

In this case, it is assumed that the first terminal device 210 sends first data to the second terminal device 220 in the subband 2 in the slot n+1, and the first data is included in a PSSCH. As shown in FIG. 9, the first terminal device 210 may receive, at 910 of a PSFCH in a slot n+6 based on the first mapping relationship, first acknowledgment information from the second terminal device 220, and the first acknowledgment information is included in a PSFCH. As shown in FIG. 10, the first terminal device 210 may receive, at 1010 of a PSFCH in a slot n+6 based on the first mapping relationship, first acknowledgment information from the second terminal device 220, and the first acknowledgment information is included in a PSFCH. For example, if the first data is located on a low-frequency first subchannel 901 in the subband 2, the first acknowledgment information may be received on a low-frequency first PRB. For example, if the first data is located on a high-frequency second subchannel 902 in the subband 2, the first acknowledgment information may be received on a low-frequency second PRB.

Optionally, it is assumed that the second terminal device 220 is a full-duplex device. As shown in FIG. 9, the second terminal device 220 may send second data to the first terminal device 210 in the subband 1 in the slot n+1 (or a slot n+2 or a slot n+3), and the second data is included in the PSSCH. The first terminal device 210 may send second acknowledgment information to the second terminal device 220 at 920 of the PSFCH in the slot n+6 based on the first mapping relationship, and the second acknowledgment information is included in the PSFCH. In this way, in the schematic diagram of FIG. 9, on the PSFCH in the slot n+6, the first terminal device 210 receives the first acknowledgment information in the subband 1, and sends the second acknowledgment information in the subband 2. Similarly, the second terminal device 220 sends the first acknowledgment information in the subband 1, and receives the second acknowledgment information in the subband 2. In this way, a conflict caused by both receiving and sending an acknowledgment in a same subband is avoided.

Optionally, it is assumed that the second terminal device 220 is a half-duplex device. As shown in FIG. 11, the second terminal device 220 may send second data to the first terminal device 210 in the subband 1 in a slot n+1, and the second data is included in the PSSCH. The first terminal device 210 may send second acknowledgment information to the second terminal device 220 at a resource 1110 of a PSFCH in the subband 2 in a slot n+6 based on the first mapping relationship, where the second acknowledgment information is included in the PSFCH. It may be understood that, the scenarios shown in FIG. 10 and FIG. 11 generally do not occur at the same time, to avoid a communication error occurring in the second terminal device 220 that is used as the half-duplex device.

Based on the second mapping relationship
In some embodiments, the first terminal device 210 sends, on the fifth time-frequency resource in the first frequency band, the first data channel to the second terminal device 220. In addition, the first terminal device 210 may receive, on the six time-frequency resource in the first frequency band, the second feedback channel from the second terminal device 220 based on the second mapping relationship.

Optionally, the first terminal device 210 may further receive, in the second frequency band, the second data channel from the second terminal device 220, and may send the first feedback channel to the second terminal device 220 in the second frequency band based on the second mapping relationship.

If the second terminal device 220 is a full-duplex device, the first terminal device 210 may send the first data channel and receive the second data channel in a same time unit (for example, a slot).

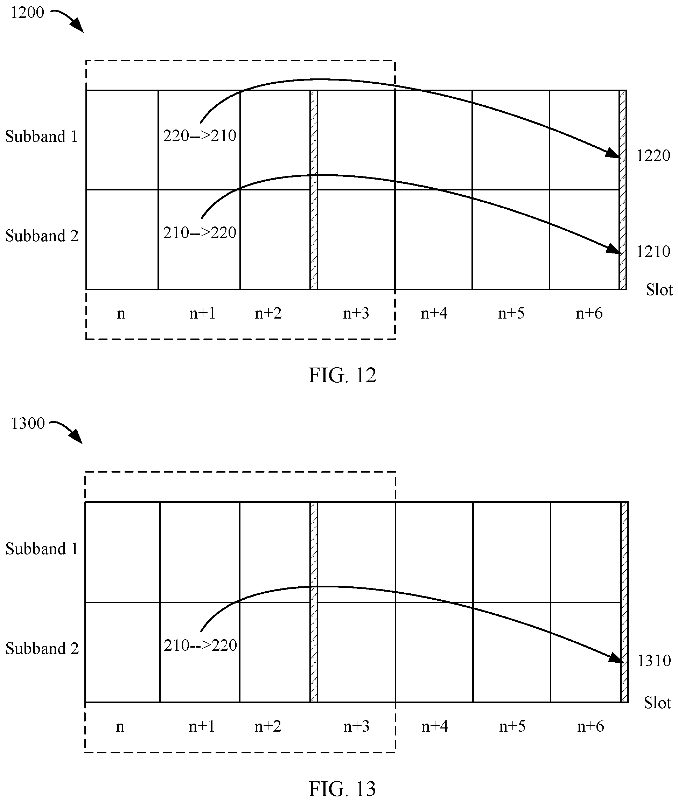

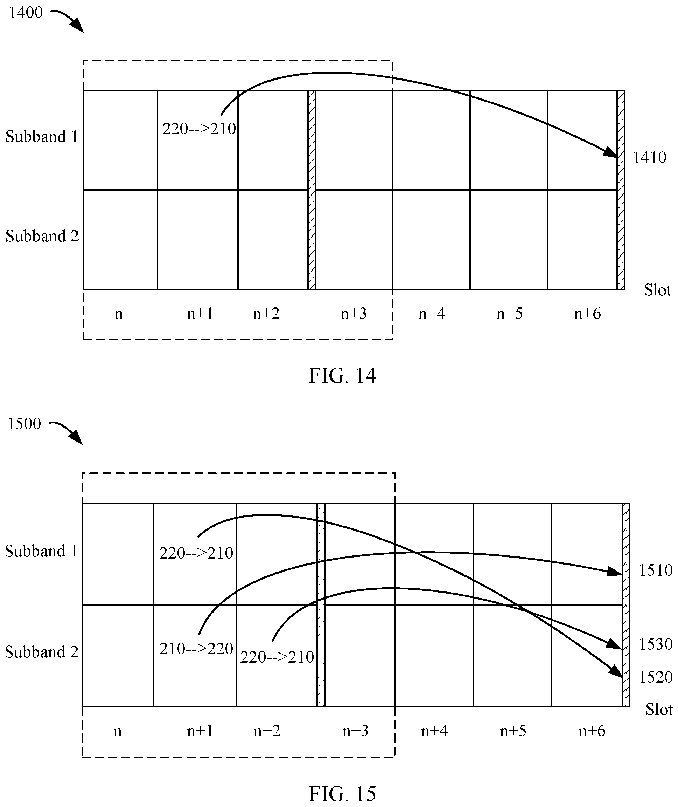

In some examples, it is assumed that the first frequency band is a subband 2, and the second frequency band is a subband 1. FIG. 12 is a diagram of communication 1200 between a first terminal device 210 and a full-duplex second terminal device 220. FIG. 13 is a diagram of communication 1300 between a first terminal device 210 and a half-duplex second terminal device 220. FIG. 14 is a diagram of communication 1400 between a first terminal device 210 and a half-duplex second terminal device 220.

In this case, it is assumed that the first terminal device 210 sends first data to the second terminal device 220 in the subband 2 in the slot n+1, and the first data is included in the PSSCH. As shown in FIG. 12, the first terminal device 210 may receive, at 1210 of a PSFCH in a slot n+6 based on the second mapping relationship, first acknowledgment information from the second terminal device 220, and the first acknowledgment information is included in a PSFCH. As shown in FIG. 13, the first terminal device 210 may receive, at 1310 of a PSFCH in a slot n+6 based on the second mapping relationship, first acknowledgment information from the second terminal device 220, and the first acknowledgment information is included in a PSFCH. For example, if the first data is located on a low-frequency first subchannel in the subband 2, the first acknowledgment information may be received on a low-frequency first PRB. For example, if the first data is located on a high-frequency second subchannel in the subband 2, the first acknowledgment information may be received on a low-frequency second PRB.

Optionally, it is assumed that the second terminal device 220 is a full-duplex device. As shown in FIG. 12, the second terminal device 220 may send second data to the first terminal device 210 in the subband 1 in the slot n+1 (or a slot n+2 or a slot n+3), and the second data is included in the PSSCH. The first terminal device 210 may send second acknowledgment information to the second terminal device 220 at 1220 of the PSFCH in the slot n+6 based on the second mapping relationship, where the second acknowledgment information is included in the PSFCH. In this way, in the schematic diagram of FIG. 12, on the PSFCH in the slot n+6, the first terminal device 210 sends the second acknowledgment information in the subband 1, and receive the first acknowledgment information in the subband 2. Similarly, the second terminal device 220 receives the second acknowledgment information in the subband 1, and sends the first second acknowledgment information in the subband 2. In this way, a conflict caused by receiving and sending acknowledgment information in a same subband is avoided.

Optionally, it is assumed that the second terminal device 220 is a half-duplex device. As shown in FIG. 14, the second terminal device 220 may send second data to the first terminal device 210 in the subband 1 in a slot n+1, and the second data is included in the PSSCH. The first terminal device 210 may send second acknowledgment information to the second terminal device 220 at a resource 1410 of a PSFCH in the subband 1 in a slot n+6 based on the second mapping relationship, where the second acknowledgment information is included in the PSFCH. It may be understood that, the scenarios shown in FIG. 13 and FIG. 14 generally do not occur at the same time, to avoid a communication error occurring in the second terminal device 220 that is used as the half-duplex device.

Based on the first mapping relationship and the second mapping relationship

In some embodiments, the first terminal device 210 expects that a transmit frequency band of the first terminal device 210 is a first frequency band (for example, the subband 2), and expects that a receive frequency band of the first terminal device 210 is a second frequency band (for example, the subband 1). However, in some cases, the second terminal device 220 may fail to meet an expectation of the first terminal device 210 due to a reason of the second terminal device 220.

For example, the first terminal device 210 sends, on the first time-frequency resource in the first frequency band, the first data channel to the second terminal device 220. In addition, the first terminal device 210 may receive, on the second time-frequency resource in the second frequency band, the first feedback channel from the second terminal device 220 based on the first mapping relationship.

Optionally, if the first terminal device 210 receives, in the second frequency band, the second data channel from the second terminal device 220, the first terminal device 210 may send the second feedback channel to the second terminal device 220 in the first frequency band based on the first mapping relationship. If the first terminal device 210 receives, in the first frequency band, the second data channel from the second terminal device 220, the first terminal device 210 may send the first feedback channel to the second terminal device 220 in the first frequency band based on the second mapping relationship.

It is assumed that the first frequency band is a subband 2, and the second frequency band is a subband 1. FIG. 15 is a diagram of communication 1500 between a first terminal device 210 and a full-duplex second terminal device 220.

Optionally, it is assumed that the second terminal device 220 is a full-duplex device. As shown in FIG. 15, it is assumed that the first terminal device 210 sends first data to the second terminal device 220 in the subband 2 in a slot n+1, and the first data is included in a PSSCH. The first terminal device 210 may receive, at 1510 of a PSFCH in a slot n+6 based on the first mapping relationship, first acknowledgment information from the second terminal device 220, and the first acknowledgment information is included in a PSFCH. The second terminal device 220 may send second data to the first terminal device 210 in the subband 1 in the slot n+1, and the second data is included in the PSSCH. The first terminal device 210 may send second acknowledgment information to the second terminal device 220 at 1520 of the PSFCH in the slot n+6 based on the first mapping relationship, and the second acknowledgment information is included in the PSFCH. The second terminal device 220 may send third data to the first terminal device 210 in the subband 2 in a slot n+2, and the third data is included in the PSSCH. The first terminal device 210 may send third acknowledgment information to the second terminal device 220 at 1530 of the PSFCH in the slot n+6 based on the second mapping relationship, where the third acknowledgment information is included in the PSFCH. In this way, in the schematic diagram of FIG. 15, on the PSFCH in the slot n+6, the first terminal device 210 sends the second acknowledgment information/the third acknowledgment message in the subband 2, and receive the first acknowledgment information in the subband 1. In this way, a conflict caused by receiving and sending acknowledgment information in a same subband is avoided.

Optionally, it is assumed that the second terminal device 220 is a half-duplex device. As shown in FIG. 14, the second terminal device 220 may send second data to the first terminal device 210 in the subband 1 in a slot n+1, and the second data is included in a PSSCH. For the first terminal device 210, a receive frequency band of the second data is the subband 1, and the subband 1 is not an expected receive frequency band of the first terminal device 210. Therefore, the first terminal device 210 may send, based on the second mapping relationship, second acknowledgment information to the second terminal device 220 at the resource 1410 of the PSFCH in the subband 1 in a slot n+6, and the second acknowledgment information is included in a PSFCH.

In this way, both the first mapping relationship and the second mapping relationship are considered, and the first terminal device 210 can receive the acknowledgment information in the subband 1 and send the acknowledgment information in the subband 2. In this way, a conflict caused by receiving and sending acknowledgment information in a same subband is avoided.

It should be understood that the foregoing examples with reference to FIG. 9 to FIG. 15 are only examples. For example, although FIG. 9 to FIG. 15 are for symmetric subbands, embodiments of this application are also applicable to the asymmetric subbands shown in FIG. 5. Details are not described herein again.

It should be noted that, although a subchannel (subchannel) is not shown in FIG. 11 to FIG. 15, a mapping relationship between a subchannel and a resource unit (also referred to as a feedback channel unit) shown in FIG. 9 and FIG. 10 may also be used in FIG. 11 to FIG. 15 and the embodiments corresponding to FIG. 11 to FIG. 15.

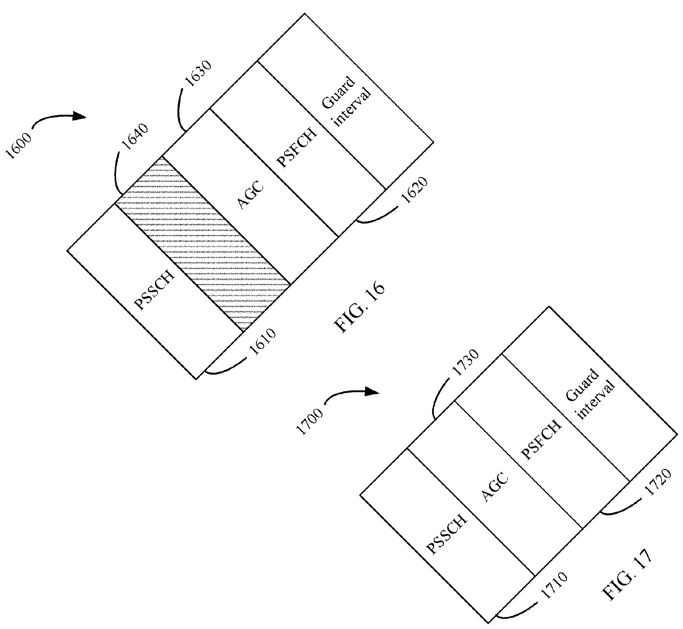

In some embodiments of this application, there may be a guard interval between the PSSCH and the PSFCH. FIG. 16 is a diagram of a symbol structure 1600 of a PSFCH used to transmit acknowledgment information. It may be assumed that a PSSCH 1610 and a PSFCH 1620 are in a same slot, for example, a slot n+6. Optionally, a guard interval 1640 and a symbol of an automatic gain control (Automatic Gain Control, AGC) 1630 may be included between the PSSCH 1610 and the PSFCH 1620. In this way, switching between sending and receiving can be implemented. This ensures correct communication.

In some other embodiments of this application, there may be no guard interval between the PSSCH and the PSFCH. For example, both the PSSCH and the PSFCH that are in a same slot are used for receiving. For example, third data is received on the PSSCH, and first acknowledgment information is received on the PSFCH. For example, both the PSSCH and the PSFCH that are in a same slot are used for sending. For example, fourth data is sent on the PSSCH, and second acknowledgment information is sent on the PSFCH. FIG. 17 is a diagram of a symbol structure 1700 of a PSFCH used to transmit acknowledgment information. It may be assumed that a PSSCH 1710 and a PSFCH 1720 are in a same slot, for example, a slot n+6. Optionally, a symbol of an AGC 1730 may be included between the PSSCH 1710 and the PSFCH 1720, and a guard interval is not included. In this way, because switching between sending and receiving does not need to be performed, the guard interval can be saved. This improves symbol utilization, and improves communication efficiency.

In this manner, in this embodiment of this application, the first terminal device may determine a mapping relationship between the PSSCH and the PSFCH based on indication information, so that the first terminal device can separately receive and send acknowledgment information in different subbands. In this way, the first terminal device can be prevented from simultaneously receiving/sending a feedback channel in a same subband. This can avoid a delay and the like caused by a priority, and improve communication efficiency.

It should be understood that, in embodiments of this application, "first", "second", and "third" and the like are only intended to indicate that a plurality of objects may be different, but two objects may be the same. "First", "second", and "third" should not be construed as any limitation on embodiments of this application.

It should be further understood that division into the manners, cases, categories, and embodiments in embodiments of this application is only for ease of description, and should not constitute a particular limitation. Features in the manners, categories, cases, and embodiments may be combined with each other provided that the features are logical.

It should be further understood that the foregoing content is only intended to help a person skilled in the art better understand embodiments of this application, instead of limiting the scope of embodiments of this application. A person skilled in the art may make various modifications, variations, combinations, or the like based on the foregoing content. A solution obtained through such a modification, variation, or combination also falls within the scope of embodiments of this application.

It should be further understood that the foregoing content descriptions focus on differences between embodiments. For same or similar parts, refer to each other. For brevity, details are not described herein again.

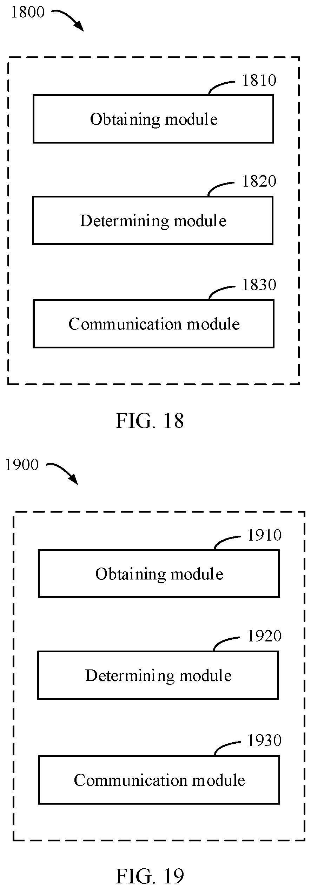

FIG. 18 is a schematic block diagram of a first terminal device 1800 according to some embodiments of this application. The first terminal device 1800 may be implemented as the first terminal device 210 shown in FIG. 2, or implemented as a part (for example, a chip) of the first terminal device 210. This is not limited in this application.

As shown in FIG. 18, the first terminal device 1800 includes an obtaining module 1810, a determining module 1820, and a communication module 1830.

In some embodiments,
the obtaining module 1810 is configured to obtain first information, where the first information indicates a first time-frequency resource occupied by a first data channel and a second time-frequency resource occupied by a first feedback channel, the first data channel is located in a first frequency band, the first feedback channel is located in a second frequency band, the first feedback channel includes first acknowledgment information of the first data channel, the first frequency band and the second frequency band do not overlap in frequency domain, and the first terminal device 1800 is a subband non-overlapping full-duplex device; the determining module 1820 is configured to determine a first mapping relationship based on the first information and an identifier of the first terminal device 1800, where the first mapping relationship includes a mapping relationship between a third time-frequency resource and a fourth time-frequency resource, the third time-frequency resource is a time-frequency resource on which the first terminal device 1800 sends the first data channel, the third time-frequency resource is a part or all of the first time-frequency resource, the fourth time-frequency resource is a time-frequency resource on which the first terminal device 1800 receives the first feedback channel, and the fourth time-frequency resource is a part or all of the second time-frequency resource; the communication module 1830 is configured to send the first data channel to the second terminal device on the third time-frequency resource; and the communication module 1830 is further configured to receive, on the fourth time-frequency resource based on the first mapping relationship, the first feedback channel from the second terminal device.

Optionally, the first information further indicates a fifth time-frequency resource occupied by a second data channel and a sixth time-frequency resource occupied by a second feedback channel, the second data channel is located in the second frequency band, the second feedback channel is located in the first frequency band, and the second feedback channel includes second acknowledgment information of the second data channel; and the first mapping relationship further includes a mapping relationship between a seventh time-frequency resource and an eighth time-frequency resource, the seventh time-frequency resource is a time-frequency resource on which the first terminal device 1800 receives the second data channel, the seventh time-frequency resource is a part or all of the fifth time-frequency resource, the eighth time-frequency resource is a time-frequency resource on which the first terminal device 1800 sends the second feedback channel, and the eighth time-frequency resource is a part or all of the sixth time-frequency resource.

Optionally, the first data channel and the second data channel are located in a same time unit. For example, the time unit includes at least one slot or at least one symbol.

Optionally, the obtaining module 1810 may be configured to obtain the first information preconfigured on the first terminal device 1800. Optionally, the communication module 1830 is further configured to send the first information to the second terminal device.

Optionally, the obtaining module 1810 may be configured to receive the first information from the second terminal device.

Optionally, the first information includes a first bitmap, the first bitmap indicates the first time-frequency resource and the second time-frequency resource, a length of the first bitmap is determined based on a quantity of resource units of the first feedback channel, and the resource unit includes at least one of the following: a time domain unit, a frequency domain unit, and a code domain unit.

Optionally, the communication module 1830 is further configured to send second information to the second terminal device, where the second information indicates that the first terminal device 1800 is a subband non-overlapping full-duplex device.

Optionally, the second information further indicates at least one of the following: a third frequency band is a transmit frequency band of the first terminal device 1800; or a fourth frequency band is a receive frequency band of the first terminal device 1800. When the second terminal device is a subband non-overlapping full-duplex device, the first frequency band is a frequency band negotiated by the first terminal device 1800 and the second terminal device based on the third frequency band, and/or the second frequency band is a frequency band negotiated by the first terminal device 1800 and the second terminal device based on the fourth frequency band. When the second terminal device is not the subband non-overlapping full-duplex device, the first terminal device and the second terminal device do not have the foregoing frequency band negotiation process.

The obtaining module 1810 may be configured to obtain third information, where the third information indicates a ninth time-frequency resource occupied by a first data channel and a tenth time-frequency resource occupied by a second feedback channel, the first data channel and the second feedback channel are located in the first frequency band, and the second feedback channel includes third acknowledgment information of the first data channel. The determining module 1820 is configured to determine a second mapping relationship based on the third information and the identifier of the first terminal device 1800, where the second mapping relationship includes a mapping relationship between an eleventh time-frequency resource and a twelfth time-frequency resource, the eleventh time-frequency resource is a time-frequency resource on which the first terminal device 1800 sends the first data channel, the eleventh time-frequency resource is a part or all of the ninth time-frequency resource, the twelfth time-frequency resource is a time-frequency resource on which the first terminal device 1800 receives the second feedback channel, and the twelfth time-frequency resource is a part or all of the tenth time-frequency resource.

Optionally, the communication module 1830 is further configured to: if the first data channel from the second terminal device is received in the first frequency band, send, in the first frequency band based on the second mapping relationship, the second feedback channel to the second terminal device.

Optionally, the communication module 1830 is further configured to: if the second data channel from the second terminal device is received in the second frequency band, send, in the first frequency band based on the first mapping relationship, the second feedback channel to the second terminal device.

In some embodiments,
the obtaining module 1810 may be configured to obtain third information, where the third information indicates a first time-frequency resource occupied by a first data channel and a second time-frequency resource occupied by a second feedback channel, the first data channel and the second feedback channel are located in a first frequency band, the second feedback channel includes first acknowledgment information of the first data channel, and the first terminal device 1800 is a subband non-overlapping full-duplex device; the determining module 1820 may be configured to determine a second mapping relationship based on the third information and an identifier of the first terminal device 1800, where the second mapping relationship includes a mapping relationship between a third time-frequency resource and a fourth time-frequency resource, the third time-frequency resource is a time-frequency resource on which the first terminal device 1800 sends the first data channel, the third time-frequency resource is a part or all of the first time-frequency resource, the fourth time-frequency resource is a time-frequency resource on which the first terminal device 1800 receives the second feedback channel, and the fourth time-frequency resource is a part or all of the second time-frequency resource; the communication module 1830 is configured to send the first data channel to the second terminal device on the third time-frequency resource; and the communication module 1830 is further configured to receive, on the fourth time-frequency resource based on the second mapping relationship, the second feedback channel from the second terminal device.

Optionally, the third information further indicates a fifth time-frequency resource occupied by a second data channel and a sixth time-frequency resource occupied by a first feedback channel, the second data channel and the first feedback channel are located in a second frequency band, the first frequency band and the second frequency band do not overlap in frequency domain, and the first feedback channel includes second acknowledgment information of the second data channel; and the second mapping relationship further includes a mapping relationship between a seventh time-frequency resource and an eighth time-frequency resource, the seventh time-frequency resource is a time-frequency resource on which the first terminal device 1800 receives the second data channel, the seventh time-frequency resource is a part or all of the fifth time-frequency resource, the eighth time-frequency resource is a time-frequency resource on which the first terminal device 1800 sends the first feedback channel, and the eighth time-frequency resource is a part or all of the sixth time-frequency resource.

Optionally, the first data channel and the second data channel are located in a same time unit. For example, the time unit includes at least one slot or at least one symbol.

Optionally, the obtaining module 1810 may be configured to obtain the third information preconfigured on the first terminal device 1800. The communication module 1830 may be further configured to send the third information to the second terminal device.

Optionally, the obtaining module 1810 may be configured to receive the third information from the second terminal device.

Optionally, the third information includes a second bitmap, the second bitmap indicates the first time-frequency resource and the second time-frequency resource, a length of the second bitmap is determined based on a quantity of resource units of the second feedback channel, and the resource unit includes at least one of the following: a time domain unit, a frequency domain unit, and a code domain unit.

Optionally, the communication module 1830 may be further configured to send second information to the second terminal device, where the second information indicates that the first terminal device 1800 is a subband non-overlapping full-duplex device.

The first terminal device 1800 in FIG. 18 can be configured to implement the processes described by the first terminal device 210 in FIG. 6 to FIG. 17. For brevity, details are not described herein again.

FIG. 19 is a schematic block diagram of a second terminal device 1900 according to some embodiments of this application. The second terminal device 1900 may be implemented as the second terminal device 220 shown in FIG. 2, or may be implemented as a part (for example, a chip) of the second terminal device 220. This is not limited in this application.

As shown in FIG. 19, the second terminal device 1900 includes an obtaining module 1910, a determining module 1920, and a communication module 1930.

In some embodiments,
the obtaining module 1910 is configured to obtain first information, where the first information indicates a first time-frequency resource occupied by a first data channel and a second time-frequency resource occupied by a first feedback channel, the first data channel is located in a first frequency band, the first feedback channel is located in a second frequency band, the first feedback channel includes first acknowledgment information of the first data channel, and the first frequency band and the second frequency band do not overlap in frequency domain; the determining module 1920 is configured to determine a first mapping relationship based on the first information and an identifier of the first terminal device, where the first mapping relationship includes a mapping relationship between a third time-frequency resource and a fourth time-frequency resource, the third time-frequency resource is a time-frequency resource on which the first terminal device sends the first data channel, the third time-frequency resource is a part or all of the first time-frequency resource, the fourth time-frequency resource is a time-frequency resource on which the first terminal device receives the first feedback channel, the fourth time-frequency resource is a part or all of the second time-frequency resource, and the first terminal device is a subband non-overlapping full-duplex device; the communication module 1930 is configured to receive, on the third time-frequency resource, the first data channel from the first terminal device; and the communication module 1930 is configured to send, on the fourth time-frequency resource based on the first mapping relationship, the first feedback channel to the first terminal device.

Optionally, the first information further indicates a fifth time-frequency resource occupied by a second data channel and a sixth time-frequency resource occupied by a second feedback channel, the second data channel is located in the second frequency band, the second feedback channel is located in the first frequency band, and the second feedback channel includes second acknowledgment information of the second data channel; and the first mapping relationship further includes a mapping relationship between a seventh time-frequency resource and an eighth time-frequency resource, the seventh time-frequency resource is a time-frequency resource on which the first terminal device receives the second data channel, the seventh time-frequency resource is a part or all of the fifth time-frequency resource, the eighth time-frequency resource is a time-frequency resource on which the first terminal device sends the second feedback channel, and the eighth time-frequency resource is a part or all of the sixth time-frequency resource.

Optionally, the first data channel and the second data channel are located in a same time unit. For example, the time unit includes at least one slot or at least one symbol.

Optionally, the obtaining module 1910 is configured to obtain the first information preconfigured on the second terminal device 1900. Optionally, the communication module 1930 is configured to send the first information to the first terminal device.

Optionally, the obtaining module 1910 is configured to receive the first information from the first terminal device.

Optionally, the first information includes a first bitmap, the first bitmap indicates the first time-frequency resource and the second time-frequency resource, a length of the first bitmap is determined based on a quantity of resource units of the first feedback channel, and the resource unit includes at least one of the following: a time domain unit, a frequency domain unit, and a code domain unit.

Optionally, the communication module 1930 is configured to receive second information from the first terminal device, where the second information indicates that the first terminal device is a subband non-overlapping full-duplex device.

Optionally, the second information further indicates at least one of the following: a third frequency band is a transmit frequency band of the first terminal device; or a fourth frequency band is a receive frequency band of the first terminal device. Optionally, when the second terminal device is a subband non-overlapping full-duplex device, the first frequency band is a frequency band negotiated by the first terminal device and the second terminal device 1900 based on the third frequency band, and/or the second frequency band is a frequency band negotiated by the first terminal device and the second terminal device 1900 based on the fourth frequency band. When the second terminal device is not the subband non-overlapping full-duplex device, the first terminal device and the second terminal device do not have the foregoing frequency band negotiation process.

Optionally, the communication module 1930 is configured to send fourth information to the first terminal device, where the fourth information indicates that the second terminal device 1900 is a subband non-overlapping full-duplex device, or the fourth information indicates that the second terminal device 1900 is a subband non-overlapping half-duplex device.

Optionally, the obtaining module 1910 is configured to obtain third information, where the third information indicates a ninth time-frequency resource occupied by a first data channel and a tenth time-frequency resource occupied by a second feedback channel, the first data channel and the second feedback channel are located in the first frequency band, and the second feedback channel includes third acknowledgment information of the first data channel. The determining module 1920 is configured to determine a second mapping relationship based on the third information and the identifier of the first terminal device, where the second mapping relationship includes a mapping relationship between an eleventh time-frequency resource and a twelfth time-frequency resource, the eleventh time-frequency resource is a time-frequency resource on which the first terminal device sends the first data channel, the eleventh time-frequency resource is a part or all of the ninth time-frequency resource, the twelfth time-frequency resource is a time-frequency resource on which the first terminal device receives the second feedback channel, and the twelfth time-frequency resource is a part or all of the tenth time-frequency resource.

Optionally, the communication module 1930 is configured to: if the second terminal device sends the first data channel to the first terminal device in the first frequency band, receive, in the first frequency band based on the second mapping relationship, the second feedback channel from the first terminal device.

Optionally, the communication module 1930 is configured to: if the second terminal device sends the second data channel to the first terminal device in the second frequency band, receive, in the first frequency band based on the first mapping relationship, the first feedback channel from the first terminal device.

In some embodiments,
the obtaining module 1910 is configured to obtain third information, where the third information indicates a first time-frequency resource occupied by a first data channel and a second time-frequency resource occupied by a second feedback channel, the first data channel and the second feedback channel are located in a first frequency band, and the second feedback channel includes first acknowledgment information of the first data channel; the determining module 1920 is configured to determine a second mapping relationship based on the third information and an identifier of the first terminal device, where the second mapping relationship includes a mapping relationship between a third time-frequency resource and a fourth time-frequency resource, the third time-frequency resource is a time-frequency resource on which the first terminal device sends the first data channel, the third time-frequency resource is a part or all of the first time-frequency resource, the fourth time-frequency resource is a time-frequency resource on which the first terminal device receives the second feedback channel, the fourth time-frequency resource is a part or all of the second time-frequency resource, and the first terminal device is a subband non-overlapping full-duplex device; the communication module 1930 is configured to receive, on the third time-frequency resource, the first data channel from the first terminal device; and the communication module 1930 is configured to send, on the fourth time-frequency resource based on the second mapping relationship, the second feedback channel to the first terminal device.

Optionally, the third information further indicates a fifth time-frequency resource occupied by a second data channel and a sixth time-frequency resource occupied by a first feedback channel, the second data channel and the first feedback channel are located in a second frequency band, the first frequency band and the second frequency band do not overlap in frequency domain, and the first feedback channel includes second acknowledgment information of the second data channel; and the second mapping relationship further includes a mapping relationship between a seventh time-frequency resource and an eighth time-frequency resource, the seventh time-frequency resource is a time-frequency resource on which the first terminal device receives the second data channel, the seventh time-frequency resource is a part or all of the fifth time-frequency resource, the eighth time-frequency resource is a time-frequency resource on which the first terminal device sends the first feedback channel, and the eighth time-frequency resource is a part or all of the sixth time-frequency resource.

Optionally, the first data channel and the second data channel are located in a same time unit. For example, the time unit includes at least one slot or at least one symbol.

Optionally, the obtaining module 1910 is configured to obtain the third information preconfigured on the second terminal device 1900. Optionally, the communication module 1930 is configured to send the third information to the first terminal device.

Optionally, the obtaining module 1910 is configured to receive the third information from the first terminal device. Optionally, the third information includes a second bitmap, the second bitmap indicates the first time-frequency resource and the second time-frequency resource, a length of the second bitmap is determined based on a quantity of resource units of the second feedback channel, and the resource unit includes at least one of the following: a time domain unit, a frequency domain unit, and a code domain unit.

Optionally, the communication module 1930 is configured to receive second information from the first terminal device, where the second information indicates that the first terminal device is a subband non-overlapping full-duplex device.

Optionally, the communication module 1930 is configured to send fourth information to the first terminal device, where the fourth information indicates that the second terminal device 1900 is a subband non-overlapping full-duplex device, or the fourth information indicates that the second terminal device 1900 is a subband non-overlapping half-duplex device.

The second terminal device 1900 in FIG. 19 can be configured to implement the processes described by the second terminal device 220 in FIG. 6 to FIG. 17. For brevity, details are not described herein again.

Division into the modules or the units in embodiments of this application is an example, is only logical function division, and may be other division in actual implementation. In addition, functional units in embodiments of this application may be integrated into one unit, each of the units may exist alone physically, or two or more units may be integrated into one unit. The integrated unit may be implemented in a form of hardware, or may be implemented in a form of a software functional unit.

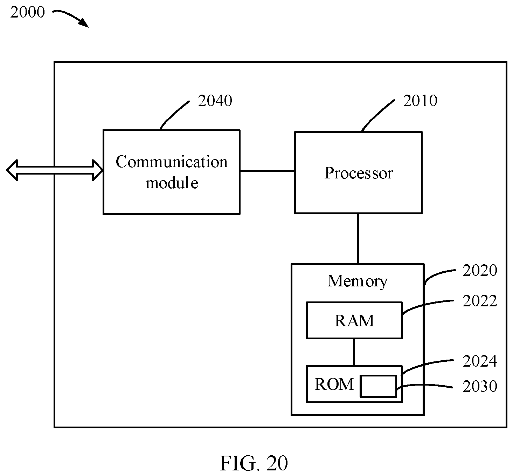

FIG. 20 is a schematic block diagram of an example terminal device 2000 that may be configured to implement an embodiment of this application. The device 2000 may be implemented or included in the first terminal device 210 or the second terminal device 220 in FIG. 2. As shown in the figure, the device 2000 includes one or more processors 2010, one or more memories 2020 coupled to the processor 2010, and a communication module 2040 coupled to the processor 2010.

The communication module 2040 may be configured to perform bidirectional communication. The communication module 2040 may have at least one communication interface for communication. The communication interface may include any interface necessary for communicating with another device.

The processor 2010 may be any type applicable to a local technology network, and may include but is not limited to at least one of the following: one or more of a general-purpose computer, a dedicated computer, a microcontroller, a digital signal processor (Digital Signal Processor, DSP), or a controller-based multi-core controller architecture. The device 2000 may have a plurality of processors, such as an application-specific integrated circuit chip, which in time belongs to a clock synchronized with a main processor.

The memory 2020 may include one or more nonvolatile memories and one or more volatile memories. An example of the nonvolatile memory includes but is not limited to at least one of the following: a read-only memory (Read-Only Memory, ROM) 2024, an erasable programmable read-only memory (Erasable Programmable Read-Only Memory, EPROM), a flash memory, a hard disk, a compact disc (Compact Disc, CD), a digital versatile disc (Digital Versatile Disc, DVD), or other magnetic storage and/or optical storage. An example of the volatile memory includes but is not limited to at least one of the following: a random access memory (Random Access Memory, RAM) 2022, or another volatile memory that does not last for power-off duration.

A computer program 2030 includes computer-executable instructions executed by the associated processor 2010. The program 2030 may be stored in the ROM 2024. The processor 2010 may perform any proper action and processing by loading the program 2030 into the RAM 2022.

Embodiments of this application may be implemented by using the program 2030, so that the device 2000 may perform any of the processes discussed with reference to FIG. 6. Embodiments of this application may alternatively be implemented by using hardware or a combination of software and hardware.

The program 2030 may be tangibly included in a computer-readable medium, and the computer-readable medium may be included in the device 2000 (for example, in the memory 2020) or another storage device that may be accessed by the device 2000. The program 2030 may be loaded from the computer-readable medium to the RAM 2022 for execution. The computer-readable medium may include any type of tangible nonvolatile memory, for example, a ROM, an EPROM, a flash memory, a hard disk, a CD, or a DVD.

In some embodiments, the communication module 2040 in the device 2000 may be implemented as a transmitter and a receiver (or a transceiver), and may be configured to send/receive indication information, first information, second information, first feedback information, second feedback information, and the like. In addition, the device 2000 may further include one or more of a scheduler, a controller, and a radio frequency/an antenna. Details are not described in this application.

For example, the device 2000 in FIG. 20 may be implemented as an electronic device, or may be implemented as a chip or a chip system in an electronic device. This is not limited in embodiments of this application.

An embodiment of this application further provides a chip. The chip may include an input interface, an output interface, and a processing circuit. In this embodiment of this application, the input interface and the output interface may complete signaling or data interaction, and the processing circuit may complete generation and processing of the signaling or data information.

An embodiment of this application further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of this application further provides a processor, configured to be coupled to a memory. The memory stores instructions. When the processor runs the instructions, the processor is enabled to perform the method and function in any one of the foregoing embodiments.

An embodiment of this application further provides a computer program product including instructions. When the computer program product runs on a computer, the computer is enabled to perform the method and function in any one of the foregoing embodiments.

An embodiment of this application further provides a computer-readable storage medium. The computer-readable storage medium stores computer instructions. When a processor runs the instructions, the processor is enabled to perform the method and function in any one of the foregoing embodiments.

Usually, various embodiments of this application may be implemented by hardware or a dedicated circuit, software, logic, or any combination thereof. Some aspects may be implemented by hardware, and other aspects may be implemented by firmware or software, and may be performed by a controller, a microprocessor, or another computing device. Although aspects of embodiments of this application are shown and described as block diagrams or flowcharts, or represented by some other illustrations, it should be understood that the blocks, apparatuses, systems, technologies, or methods described in this specification may be implemented as, for example, non-limiting examples, hardware, software, firmware, dedicated circuits or logic, general-purpose hardware, controllers, other computing devices, or a combination thereof.

This application further provides at least one computer program product tangibly stored on a non-transitory computer-readable storage medium. The computer program product includes computer-executable instructions, such as instructions included in a program module, which are executed in a device on a real or virtual target processor to perform the process/method as described above with reference to the accompanying drawings. Usually, the program module includes a routine, a program, a library, an object, a class, an assembly, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be located in both a local storage medium and a remote storage medium.

Computer program code for implementing the method in this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed all on a computer, partially on a computer, as an independent software package, partially on a computer and partially on a remote computer, or all on a remote computer or server.

In the context of this application, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this application are described in a particular order in the accompanying drawings, this does not require or imply that these operations need to be performed in the particular order or that all of the shown operations need to be performed to achieve a desired result. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that features and functions of two or more apparatuses according to this application may be specific in one apparatus. Instead, features and functions of one apparatus described above may be further specific in a plurality of apparatuses.

The foregoing has described the implementations of this application. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

## Claims

1. A communication method, performed by a first terminal device or a chip of a first terminal device, wherein the method comprises:
obtaining first information, wherein the first information indicates a first time-frequency resource occupied by a first data channel and a second time-frequency resource occupied by a first feedback channel, the first data channel is located in a first frequency band, the first feedback channel is located in a second frequency band, the first feedback channel comprises first acknowledgment information of the first data channel, the first frequency band and the second frequency band do not overlap in frequency domain, and the first terminal device is a subband non-overlapping full-duplex device;
determining a first mapping relationship based on the first information and an identifier of the first terminal device, wherein the first mapping relationship comprises a mapping relationship between a third time-frequency resource and a fourth time-frequency resource, the third time-frequency resource is a time-frequency resource on which the first terminal device sends the first data channel, the third time-frequency resource is a part or all of the first time-frequency resource, the fourth time-frequency resource is a time-frequency resource on which the first terminal device or the chip receives the first feedback channel, and the fourth time-frequency resource is a part or all of the second time-frequency resource;
sending the first data channel to a second terminal device on the third time-frequency resource; and
receiving on the fourth time-frequency resource based on the first mapping relationship, the first feedback channel from the second terminal device.

2. The method according to claim 1, wherein the first information further indicates a fifth time-frequency resource occupied by a second data channel and a sixth time-frequency resource occupied by a second feedback channel, the second data channel is located in the second frequency band, the second feedback channel is located in the first frequency band, and the second feedback channel comprises second acknowledgment information of the second data channel; and the first mapping relationship further comprises a mapping relationship between a seventh time-frequency resource and an eighth time-frequency resource, the seventh time-frequency resource is a time-frequency resource on which the first terminal device receives the second data channel, the seventh time-frequency resource is a part or all of the fifth time-frequency resource, the eighth time-frequency resource is a time-frequency resource on which the first terminal device or the chip sends the second feedback channel, and the eighth time-frequency resource is a part or all of the sixth time-frequency resource.

3. The method according to claim 2, wherein the first data channel and the second data channel are located in a same time unit.

4. The method according to claim 3, wherein the time unit comprises at least one slot or at least one symbol.

5. The method according to any one of claims 1 to 4, wherein the obtaining first information comprises:
obtaining the first information preconfigured on the first terminal device.

6. The method according to any one of claims 1 to 4, wherein the obtaining first information comprises:
receiving the first information from the second terminal device.

7. The method according to any one of claims 1 to 6, wherein the first information comprises a first bitmap, the first bitmap indicates the first time-frequency resource and the second time-frequency resource, a length of the first bitmap is determined based on a quantity of resource units of the first feedback channel, and the resource unit comprises at least one of the following: a time domain unit, a frequency domain unit, or a code domain unit.

8. The method according to any one of claims 1 to 7, wherein the method further comprises:
sending second information to the second terminal device, wherein the second information indicates that the first terminal device is a subband non-overlapping full-duplex device.

9. The method according to claim 8, wherein the second information further indicates at least one of the following:
a third frequency band is a transmit frequency band of the first terminal device; or
a fourth frequency band is a receive frequency band of the first terminal device.

10. The method according to claim 9, wherein when the second terminal device is a subband non-overlapping full-duplex device,
the first frequency band is a frequency band negotiated by the first terminal device and the second terminal device based on the third frequency band; or
the second frequency band is a frequency band negotiated by the first terminal device and the second terminal device based on the fourth frequency band.

11. The method according to claim 2, wherein the method further comprises:
obtaining third information, wherein the third information indicates a ninth time-frequency resource occupied by the first data channel and a tenth time-frequency resource occupied by the second feedback channel, the first data channel and the second feedback channel are located in the first frequency band, and the second feedback channel comprises third acknowledgment information of the first data channel; and
determining a second mapping relationship based on the third information and the identifier of the first terminal device, wherein the second mapping relationship comprises a mapping relationship between an eleventh time-frequency resource and a twelfth time-frequency resource, the eleventh time-frequency resource is a time-frequency resource on which the first terminal device or the chip sends the first data channel, the eleventh time-frequency resource is a part or all of the ninth time-frequency resource, the twelfth time-frequency resource is a time-frequency resource on which the first terminal device or the chip receives the second feedback channel, and the twelfth time-frequency resource is a part or all of the tenth time-frequency resource.

12. A communication method, performed by a first terminal device or a chip of a first terminal device, wherein the method comprises:
obtaining third information, wherein the third information indicates a first time-frequency resource occupied by a first data channel and a second time-frequency resource occupied by a second feedback channel, the first data channel and the second feedback channel are located in a first frequency band, the second feedback channel comprises first acknowledgment information of the first data channel, and the first terminal device is a subband non-overlapping full-duplex device;
determining a second mapping relationship based on the third information and an identifier of the first terminal device, wherein the second mapping relationship comprises a mapping relationship between a third time-frequency resource and a fourth time-frequency resource, the third time-frequency resource is a time-frequency resource on which the first terminal device or the chip sends the first data channel, the third time-frequency resource is a part or all of the first time-frequency resource, the fourth time-frequency resource is a time-frequency resource on which the first terminal device or the chip receives the second feedback channel, and the fourth time-frequency resource is a part or all of the second time-frequency resource;
sending the first data channel to a second terminal device on the third time-frequency resource; and
receiving the second feedback channel from the second terminal device on the fourth time-frequency resource based on the second mapping relationship.

13. The method according to claim 12, wherein the third information further indicates a fifth time-frequency resource occupied by a second data channel and a sixth time-frequency resource occupied by a first feedback channel, the second data channel and the first feedback channel are located in a second frequency band, the first frequency band and the second frequency band do not overlap in frequency domain, and the first feedback channel comprises second acknowledgment information of the second data channel; and the second mapping relationship further comprises a mapping relationship between a seventh time-frequency resource and an eighth time-frequency resource, the seventh time-frequency resource is a time-frequency resource on which the first terminal device or the chip receives the second data channel, the seventh time-frequency resource is a part or all of the fifth time-frequency resource, the eighth time-frequency resource is a time-frequency resource on which the first terminal device or the chip sends the first feedback channel, and the eighth time-frequency resource is a part or all of the sixth time-frequency resource.

14. A terminal device, which is a first terminal device, wherein the first terminal device comprises a processor and a memory, the memory stores computer executable instructions, and when the computer executable instructions are executed by the processor, the first terminal device is enabled to implement the method according to any one of claims 1 to 13.

15. A chip, wherein the chip comprises a processing circuit, and the processing circuit is configured to perform the method of any one of claims 1 to 13.

## Patentansprüche

1. Kommunikationsverfahren, das durch eine erste Endgerätevorrichtung oder einen Chip einer ersten Endgerätevorrichtung durchgeführt wird, wobei das Verfahren Folgendes umfasst:
Erlangen erster Informationen, wobei die ersten Informationen eine erste Zeit-Frequenzressource, die durch einen ersten Datenkanal belegt wird, und eine zweite Zeit-Frequenzressource, die durch einen ersten Rückmeldungskanal belegt wird, angeben, sich der erste Datenkanal in einem ersten Frequenzband befindet, sich der erste Rückmeldungskanal in einem zweiten Frequenzband befindet, der erste Rückmeldungskanal erste Bestätigungsinformationen des ersten Datenkanals umfasst, sich das erste Frequenzband und das zweite Frequenzband in einer Frequenzdomäne nicht überlappen und die erste Endgerätevorrichtung eine Vollduplexvorrichtung mit nicht überlappenden Teilbändern ist;
Bestimmen einer ersten Abbildungsbeziehung basierend auf den ersten Informationen und einer Kennung der ersten Endgerätevorrichtung, wobei die erste Abbildungsbeziehung eine Abbildungsbeziehung zwischen einer dritten Zeit-Frequenzressource und einer vierten Zeit-Frequenzressource umfasst, die dritte Zeit-Frequenzressource eine Zeit-Frequenzressource ist, auf der die erste Endgerätevorrichtung den ersten Datenkanal sendet, die dritte Zeit-Frequenzressource ein Teil oder die gesamte erste Zeit-Frequenzressource ist, die vierte Zeit-Frequenzressource eine Zeit-Frequenzressource ist, auf der die erste Endgerätevorrichtung oder der Chip den ersten Rückmeldungskanal empfängt, und die vierte Zeit-Frequenzressource ein Teil oder die gesamte zweite Zeit-Frequenzressource ist;
Senden des ersten Datenkanals an eine zweite Endgerätevorrichtung auf der dritten Zeit-Frequenzressource; und
Empfangen, auf der vierten Zeit-Frequenzressource basierend auf der ersten Abbildungsbeziehung, des ersten Rückmeldungskanals von der zweiten Endgerätevorrichtung.

2. Verfahren nach Anspruch 1, wobei die ersten Informationen ferner eine fünfte Zeit-Frequenzressource, die durch einen zweiten Datenkanal belegt wird, und eine sechste Zeit-Frequenzressource, die durch einen zweiten Rückmeldungskanal belegt wird, angeben, sich der zweite Datenkanal in dem zweiten Frequenzband befindet, sich der zweite Rückmeldungskanal in dem ersten Frequenzband befindet und der zweite Rückmeldungskanal zweite Bestätigungsinformationen des zweiten Datenkanals umfasst; und die erste Abbildungsbeziehung ferner eine Abbildungsbeziehung zwischen einer siebten Zeit-Frequenzressource und einer achten Zeit-Frequenzressource umfasst, die siebte Zeit-Frequenzressource eine Zeit-Frequenzressource ist, auf der die erste Endgerätevorrichtung den zweiten Datenkanal empfängt, die siebte Zeit-Frequenzressource ein Teil oder die gesamte fünfte Zeit-Frequenzressource ist, die achte Zeit-Frequenzressource eine Zeit-Frequenzressource ist, auf der die erste Endgerätevorrichtung oder der Chip den zweiten Rückmeldungskanal sendet und die achte Zeit-Frequenzressource ein Teil oder die gesamte sechste Zeit-Frequenzressource ist.

3. Verfahren nach Anspruch 2, wobei sich der erste Datenkanal und der zweite Datenkanal in einer gleichen Zeiteinheit befinden.

4. Verfahren nach Anspruch 3, wobei die Zeiteinheit mindestens einen Schlitz oder mindestens ein Symbol umfasst.

5. Verfahren nach einem der Ansprüche 1 bis 4, wobei das Erlangen erster Informationen Folgendes umfasst:
Erlangen der ersten Informationen, die auf der ersten Endgerätevorrichtung vorkonfiguriert sind.

6. Verfahren nach einem der Ansprüche 1 bis 4, wobei das Erlangen erster Informationen Folgendes umfasst:
Empfangen der ersten Information von der zweiten Endgerätevorrichtung.

7. Verfahren nach einem der Ansprüche 1 bis 6, wobei die ersten Informationen eine erste Bitmap umfassen, die erste Bitmap die erste Zeit-Frequenzressource und die zweite Zeit-Frequenzressource angibt, eine Länge der ersten Bitmap basierend auf einer Anzahl an Ressourceneinheiten des ersten Rückmeldungskanals bestimmt wird und die Ressourceneinheit mindestens eine der Folgenden umfasst: einer Zeitdomäneneinheit, einer Frequenzdomäneneinheit oder einer Codedomäneneinheit.

8. Verfahren nach einem der Ansprüche 1 bis 7, wobei das Verfahren ferner Folgendes umfasst:
Senden zweiter Informationen an die zweite Endgerätevorrichtung, wobei die zweiten Informationen angeben, dass die erste Endgerätevorrichtung eine Vollduplexvorrichtung mit nicht überlappenden Teilbändern ist.

9. Verfahren nach Anspruch 8, wobei die zweiten Informationen ferner mindestens eines von Folgendem angeben:
ein drittes Frequenzband ist ein Übertragungsfrequenzband der ersten Endgerätevorrichtung; oder
ein viertes Frequenzband ist ein Empfangsfrequenzband der ersten Endgerätevorrichtung.

10. Verfahren nach Anspruch 9, wobei, wenn die zweite Endgerätevorrichtung eine Vollduplexvorrichtung mit nicht überlappenden Teilbändern ist,
das erste Frequenzband ein Frequenzband ist, das durch die erste Endgerätevorrichtung und die zweite Endgerätevorrichtung basierend auf dem dritten Frequenzband ausgehandelt wird; oder das zweite Frequenzband ein Frequenzband ist, das durch die erste Endgerätevorrichtung und die zweite Endgerätevorrichtung basierend auf dem vierten Frequenzband ausgehandelt wird.

11. Verfahren nach Anspruch 2, wobei das Verfahren ferner Folgendes umfasst:
Erlangen dritter Informationen, wobei die dritten Informationen eine neunte Zeit-Frequenzressource, die durch den ersten Datenkanal belegt wird, und eine zehnte Zeit-Frequenzressource, die durch den zweiten Rückmeldungskanal belegt wird, angeben, sich der erste Datenkanal und der zweite Rückmeldungskanal in dem ersten Frequenzband befinden und der zweite Rückmeldungskanal dritte Bestätigungsinformationen des ersten Datenkanals umfasst; und
Bestimmen einer zweiten Abbildungsbeziehung basierend auf den dritten Informationen und der Kennung der ersten Endgerätevorrichtung, wobei die zweite Abbildungsbeziehung eine Abbildungsbeziehung zwischen einer elften Zeit-Frequenzressource und einer zwölften Zeit-Frequenzressource umfasst, die elfte Zeit-Frequenzressource eine Zeit-Frequenzressource ist, auf der die erste Endgerätevorrichtung oder der Chip den ersten Datenkanal sendet, die elfte Zeit-Frequenzressource ein Teil oder die gesamte neunte Zeit-Frequenzressource ist, die zwölfte Zeit-Frequenzressource eine Zeit-Frequenzressource ist, auf der die erste Endgerätevorrichtung oder der Chip den zweiten Rückmeldungskanal empfängt, und die zwölfte Zeit-Frequenzressource ein Teil oder die gesamte zehnte Zeit-Frequenzressource ist.

12. Kommunikationsverfahren, das durch eine erste Endgerätevorrichtung oder einen Chip einer ersten Endgerätevorrichtung durchgeführt wird, wobei das Verfahren Folgendes umfasst:
Erlangen dritter Informationen, wobei die dritten Informationen eine erste Zeit-Frequenzressource, die durch einen ersten Datenkanal belegt wird, und eine zweite Zeit-Frequenzressource, die durch einen zweiten Rückmeldungskanal belegt wird, angeben, sich der erste Datenkanal und der zweite Rückmeldungskanal in einem ersten Frequenzband befinden, der zweite Rückmeldungskanal erste Bestätigungsinformationen des ersten Datenkanals umfasst und die erste Endgerätevorrichtung eine Vollduplexvorrichtung mit nicht überlappenden Teilbändern ist;
Bestimmen einer zweiten Abbildungsbeziehung basierend auf den dritten Informationen und einer Kennung der ersten Endgerätevorrichtung, wobei die zweite Abbildungsbeziehung eine Abbildungsbeziehung zwischen einer dritten Zeit-Frequenzressource und einer vierten Zeit-Frequenzressource umfasst, die dritte Zeit-Frequenzressource eine Zeit-Frequenzressource ist, auf der die erste Endgerätevorrichtung oder der Chip den ersten Datenkanal sendet, die dritte Zeit-Frequenzressource ein Teil oder die gesamte erste Zeit-Frequenzressource ist, die vierte Zeit-Frequenzressource eine Zeit-Frequenzressource ist, auf der die erste Endgerätevorrichtung oder der Chip den zweiten Rückmeldungskanal empfängt, und die vierte Zeit-Frequenzressource ein Teil oder die gesamte zweite Zeit-Frequenzressource ist;
Senden des ersten Datenkanals an eine zweite Endgerätevorrichtung auf der dritten Zeit-Frequenzressource; und
Empfangen des zweiten Rückmeldungskanals von der zweiten Endgerätevorrichtung auf der vierten Zeit-Frequenzressource basierend auf der zweiten Abbildungsbeziehung.

13. Verfahren nach Anspruch 12, wobei die dritten Informationen ferner eine fünfte Zeit-Frequenzressource, die durch einen zweiten Datenkanal belegt wird, und eine sechste Zeit-Frequenzressource, die durch einen ersten Rückmeldungskanal belegt wird, angeben, sich der zweite Datenkanal und der erste Rückmeldungskanal in einem zweiten Frequenzband befinden, sich das erste Frequenzband und das zweite Frequenzband in einer Frequenzdomäne nicht überlappen und der erste Rückmeldungskanal zweite Bestätigungsinformationen des zweiten Datenkanals umfasst; und die zweite Abbildungsbeziehung ferner eine Abbildungsbeziehung zwischen einer siebten Zeit-Frequenzressource und einer achten Zeit-Frequenzressource umfasst, die siebte Zeit-Frequenzressource eine Zeit-Frequenzressource ist, auf der die erste Endgerätevorrichtung oder der Chip den zweiten Datenkanal empfängt, die siebte Zeit-Frequenzressource ein Teil oder die gesamte fünfte Zeit-Frequenzressource ist, die achte Zeit-Frequenzressource eine Zeit-Frequenzressource ist, auf der die erste Endgerätevorrichtung oder der Chip den ersten Rückmeldungskanal sendet und die achte Zeit-Frequenzressource ein Teil oder die gesamte sechste Zeit-Frequenzressource ist.

14. Endgerätevorrichtung, die eine erste Endgerätevorrichtung ist, wobei die erste Endgerätevorrichtung einen Prozessor und einen Speicher umfasst, der Speicher computerausführbare Anweisungen speichert und, wenn die computerausführbaren Anweisungen durch den Prozessor ausgeführt werden, es der ersten Endgerätevorrichtung ermöglicht wird, das Verfahren nach einem der Ansprüche 1 bis 13 umzusetzen.

15. Chip, wobei der Chip eine Verarbeitungsschaltung umfasst und die Verarbeitungsschaltung dazu konfiguriert ist, das Verfahren nach einem der Ansprüche 1 bis 13 durchzuführen.

## Revendications

1. Procédé de communication, réalisé par un premier dispositif terminal, ou par une puce d'un premier dispositif terminal, dans lequel le procédé comprend :
l'obtention de premières informations, dans lequel les premières informations indiquent une première ressource temps-fréquence occupée par un premier canal de données et une deuxième ressource temps-fréquence occupée par un premier canal de retour d'information, le premier canal de données est situé dans une première bande de fréquence, le premier canal de retour d'information est situé dans une deuxième bande de fréquence, le premier canal de retour d'information comprend des premières informations d'accusé de réception du premier canal de données, la première bande de fréquence et la deuxième bande de fréquence ne se chevauchent pas dans le domaine fréquentiel, et le premier dispositif terminal est un dispositif duplex intégral sans chevauchement de sous-bande ;
la détermination d'une première relation de mappage sur la base des premières informations et d'un identifiant du premier dispositif terminal, dans lequel la première relation de mappage comprend une relation de mappage entre une troisième ressource temps-fréquence et une quatrième ressource temps-fréquence, la troisième ressource temps-fréquence est une ressource temps-fréquence sur laquelle le premier dispositif terminal envoie le premier canal de données, la troisième ressource temps-fréquence est une partie ou la totalité de la première ressource temps-fréquence, la quatrième ressource temps-fréquence est une ressource temps-fréquence sur laquelle le premier dispositif terminal ou la puce reçoit le premier canal de retour d'information, et la quatrième ressource temps-fréquence est une partie ou la totalité de la deuxième ressource temps-fréquence ; l'envoi du premier canal de données à un second dispositif terminal sur la troisième ressource temps-fréquence ; et
la réception sur la quatrième ressource temps-fréquence sur la base de la première relation de mappage, du premier canal de retour d'information provenant du second dispositif terminal.

2. Procédé selon la revendication 1, dans lequel les premières informations indiquent en outre une cinquième ressource temps-fréquence occupée par un second canal de données et une sixième ressource temps-fréquence occupée par un second canal de retour d'information, le second canal de données est situé dans la deuxième bande de fréquence, le second canal de retour d'information est situé dans la première bande de fréquence, et le second canal de retour d'information comprend des deuxièmes informations d'accusé de réception du second canal de données ; et la première relation de mappage comprend en outre une relation de mappage entre une septième ressource temps-fréquence et une huitième ressource temps-fréquence, la septième ressource temps-fréquence est une ressource temps-fréquence sur laquelle le premier dispositif terminal reçoit le second canal de données, la septième ressource temps-fréquence est une partie ou la totalité de la cinquième ressource temps-fréquence, la huitième ressource temps-fréquence est une ressource temps-fréquence sur laquelle le premier dispositif terminal ou la puce envoie le second canal de retour d'information, et la huitième ressource temps-fréquence est une partie ou la totalité de la sixième ressource temps-fréquence.

3. Procédé selon la revendication 2, dans lequel le premier canal de données et le second canal de données sont situés dans la même unité de temps.

4. Procédé selon la revendication 3, dans lequel l'unité de temps comprend au moins un intervalle ou au moins un symbole.

5. Procédé selon l'une quelconque des revendications 1 à 4, dans lequel l'obtention de premières informations comprend :
l'obtention des premières informations préconfigurées sur le premier dispositif terminal.

6. Procédé selon l'une quelconque des revendications 1 à 4, dans lequel l'obtention de premières informations comprend :
la réception des premières informations provenant du second dispositif terminal.

7. Procédé selon l'une quelconque des revendications 1 à 6, dans lequel les premières informations comprennent une première image bitmap, la première image bitmap indique la première ressource temps-fréquence et la deuxième ressource temps-fréquence, la longueur de la première image bitmap est déterminée sur la base d'une quantité d'unités de ressource du premier canal de retour d'information, et l'unité de ressource comprend au moins l'un des éléments suivants : une unité de domaine temporel, une unité de domaine fréquentiel ou une unité de domaine de code.

8. Procédé selon l'une quelconque des revendications 1 à 7, dans lequel le procédé comprend en outre :
l'envoi de deuxièmes informations au second dispositif terminal, dans lequel les deuxièmes informations indiquent que le premier dispositif terminal est un dispositif duplex intégral sans chevauchement de sous-bande.

9. Procédé selon la revendication 8, dans lequel les deuxièmes informations indiquent en outre au moins l'un des éléments suivants :
une troisième bande de fréquence est une bande de fréquence d'émission du premier dispositif terminal ; ou
une quatrième bande de fréquence est une bande de fréquence de réception du premier dispositif terminal.

10. Procédé selon la revendication 9, dans lequel lorsque le second dispositif terminal est un dispositif duplex intégral sans chevauchement de sous-bande,
la première bande de fréquence est une bande de fréquence négociée entre le premier dispositif terminal et le second dispositif terminal sur la base de la troisième bande de fréquence ; ou
la deuxième bande de fréquence est une bande de fréquence négociée entre le premier dispositif terminal et le second dispositif terminal sur la base de la quatrième bande de fréquence.

11. Procédé selon la revendication 2, dans lequel le procédé comprend en outre :
l'obtention de troisièmes informations, dans lequel les troisièmes informations indiquent une neuvième ressource temps-fréquence occupée par le premier canal de données et une dixième ressource temps-fréquence occupée par le second canal de retour d'information, le premier canal de données et le second canal de retour d'information sont situés dans la première bande de fréquence, et le second canal de retour d'information comprend des troisièmes informations d'accusé de réception du premier canal de données ; et
la détermination d'une seconde relation de mappage sur la base des troisièmes informations et de l'identifiant du premier dispositif terminal, dans lequel la seconde relation de mappage comprend une relation de mappage entre une onzième ressource temps-fréquence et une douzième ressource temps-fréquence, la onzième ressource temps-fréquence est une ressource temps-fréquence sur laquelle le premier dispositif terminal ou la puce envoie le premier canal de données, la onzième ressource temps-fréquence est une partie ou la totalité de la neuvième ressource temps-fréquence, la douzième ressource temps-fréquence est une ressource temps-fréquence sur laquelle le premier dispositif terminal ou la puce reçoit le second canal de retour d'information, et la douzième ressource temps-fréquence est une partie ou la totalité de la dixième ressource temps-fréquence.

12. Procédé de communication, réalisé par un premier dispositif terminal, ou par une puce du premier dispositif terminal, dans lequel le procédé comprend :
l'obtention de troisièmes informations, dans lequel les troisièmes informations indiquent une première ressource temps-fréquence occupée par un premier canal de données et une deuxième ressource temps-fréquence occupée par un second canal de retour d'information, le premier canal de données et le second canal de retour d'information sont situés dans une première bande de fréquence, le second canal de retour d'information comprend des premières informations d'accusé de réception du premier canal de données, et le premier dispositif terminal est un dispositif duplex intégral sans chevauchement de sous-bande ;
la détermination d'une seconde relation de mappage sur la base des troisièmes informations et d'un identifiant du premier dispositif terminal, dans lequel la seconde relation de mappage comprend une relation de mappage entre une troisième ressource temps-fréquence et une quatrième ressource temps-fréquence, la troisième ressource temps-fréquence est une ressource temps-fréquence sur laquelle le premier dispositif terminal ou la puce envoie le premier canal de données, la troisième ressource temps-fréquence est une partie ou la totalité de la première ressource temps-fréquence, la quatrième ressource temps-fréquence est une ressource temps-fréquence sur laquelle le premier dispositif terminal ou la puce reçoit le second canal de retour d'information, et la quatrième ressource temps-fréquence est une partie ou la totalité de la deuxième ressource temps-fréquence ;
l'envoi du premier canal de données à un second dispositif terminal sur la troisième ressource temps-fréquence ; et
la réception du second canal de retour d'information provenant du second dispositif terminal sur la quatrième ressource temps-fréquence sur la base de la seconde relation de mappage.

13. Procédé selon la revendication 12, dans lequel les troisièmes informations indiquent en outre une cinquième ressource temps-fréquence occupée par un second canal de données et une sixième ressource temps-fréquence occupée par un premier canal de retour d'information, le second canal de données et le premier canal de retour d'information sont situés dans une deuxième bande de fréquence, la première bande de fréquence et la deuxième bande de fréquence ne se chevauchent pas dans le domaine fréquentiel, et le premier canal de retour d'information comprend des deuxièmes informations d'accusé de réception du second canal de données ; et la seconde relation de mappage comprend en outre une relation de mappage entre une septième ressource temps-fréquence et une huitième ressource temps-fréquence, la septième ressource temps-fréquence est une ressource temps-fréquence sur laquelle le premier dispositif terminal ou la puce reçoit le second canal de données, la septième ressource temps-fréquence est une partie ou la totalité de la cinquième ressource temps-fréquence, la huitième ressource temps-fréquence est une ressource temps-fréquence sur laquelle le premier dispositif terminal ou la puce envoie le premier canal de retour d'information, et la huitième ressource temps-fréquence est une partie ou la totalité de la sixième ressource temps-fréquence.

14. Dispositif terminal, qui est un premier dispositif terminal, dans lequel le premier dispositif terminal comprend un processeur et une mémoire, la mémoire stocke des instructions exécutables par ordinateur, et lorsque les instructions exécutables par ordinateur sont exécutées par le processeur, le premier dispositif terminal est activé pour mettre en œuvre le procédé selon l'une quelconque des revendications 1 à 13.

15. Puce, dans laquelle la puce comprend un circuit de traitement, et le circuit de traitement est configuré pour réaliser le procédé selon l'une quelconque des revendications 1 à 13.
